# EUROPEAN PATENT APPLICATION

(11) **EP 4 580 043 A1**
(43) Date of publication of application: **02.07.2025**
(21) Application number: 24220574.8
(22) Date of filing: 17.12.2024
(51) Int. Cl.: H02S 50/00

(54) **APPARATUS, SYSTEM AND METHOD FOR DETERMINING A PV MODULE LOCATION**

(30) Priority: 28.12.2023 US 202363615384 P
(71) Applicant: Solaredge Technologies Ltd., Herzeliya 4673335 (IL)
(72) Inventor: GALIN, Yoav, 4673335 Herzeliya (IL)
(74) Representative: V.O.

(57) **Abstract**

Systems, apparatuses, and methods are described for determining the location of a PV module. A computing device may determine the location of the PV module using a shading device with GPS circuitry. The shading device may be used to create a shadow by blocking light to at least a part of the PV module. This may result in a decrease in power of the PV module. The computing device may correlate the decrease in power with the location of the shading device to determine the location of the PV module.

## Description

### CROSS-REFERENCE TO RELATED APPLICATIONS

This application claims the benefit of U.S. Provisional Application No. 63/615,384, filed December 28, 2023. The above-referenced application is hereby incorporated by reference in its entirety.

### BACKGROUND

A photovoltaic (PV) module (e.g., one or more solar panels), is a device that generates electricity by using PV cells. PV cells comprise materials that generate electricity when exposed to light. The operation of the PV cells may depend on the amount of light that the PV module is exposed to. The generated electricity may be used to power electrical loads and/or stored in charge storage devices (e.g., batteries). PV modules may be arranged in groups referred to as PV module arrays in one or more solar power systems.

### SUMMARY

The following summary presents a simplified summary of certain features. The summary is not an extensive overview and is not intended to identify key or critical elements.

Systems, apparatuses, and methods are described for determining the location of a PV module. It may be useful for maintenance purposes to know the Global Positioning System (GPS) location and identity of installed PV modules. In some examples, a shading device may be used to block light to at least a part of the PV module. This may result in a decrease in power output of the PV module. The decrease in power output of the PV module can be used to determine an ID of the PV module, which may be used to map to a GPS location of the shading device. In some examples, the device that performs the mapping of the PV module may be a standalone device or may be built into the PV module for convenience. A separate device may be used to map previously installed PV modules that do not have mapping built in. In this way, the location of the PV module can be quickly and accurately determined and stored. A PV map may be determined based on the locations of a plurality of PV modules. The PV map may be displayed on a user interface.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows an example shading device.
FIG. 2 shows an example power device.
FIG. 3 shows an example mapping device.
FIG. 4 shows an example power and mapping device.
FIGS. 5A-B show example systems.
FIG. 6 shows an example graph of GPS location versus time.
FIG. 7 shows an example graph of power versus time.
FIG. 8 shows an example chart mapping GPS data via time and power.
FIG. 9 shows an example graph of GPS location versus time.
FIG. 10 shows an example graph of power versus time.
FIG. 11 shows an example chart mapping GPS data via time and power.
FIG. 12 shows an example flow diagram for determining a location of a PV module.
FIG. 13 shows an example flow diagram for determining another location of another PV module.
FIG. 14 shows an example flow diagram mapping a PV module location.
FIG. 15 shows an example flow diagram associated with a shading device.
FIG. 16 shows an example flow diagram associated with a power device.
FIGS. 17A-G show example charts.
FIGS. 18A-G show example systems.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

Systems, apparatuses, and methods are described for determining the location of a PV module. It is noted that the teachings of the presently disclosed subject matter are not bound by the systems and apparatuses described with reference to the figures. Equivalent and/or modified functionality may be consolidated or divided in another manner and may be implemented in any appropriate combination. For example, elements which are shown as separate units, may have their functionalities and/or components combined into a single unit.

It is also noted that like references in the various figures may refer to like elements throughout the application. Similar reference numbers may also connote similarities between elements. Throughout the application certain general references may be used to refer to any of the specific related elements. It is also noted that all numerical values given in the examples of the description are provided for purposes of example only and do not exclude the use of other numerical values for the same feature.

The terms "substantially" and "about" are used herein to indicate variations that are equivalent for an intended purpose or function (e.g., within a permissible variation range). Certain values or ranges of values are presented herein with numerical values being preceded by the terms "substantially" and "about". The terms "substantially" and "about" are used herein to provide literal support for the exact number that it precedes, as well as a number that is near to or approximately the number that the term precedes. In determining whether a number is near to or approximately a specifically recited number, the near or approximating un-recited number may be a number, which, in the context in which it is presented, provides a substantial equivalent of the specifically recited number.

Control devices, including "controller," "control circuitry," "computer," "processor," "processing circuitry," and variations of these terms as used herein, comprise any analog or digital electronic hardware circuit capable of performing one or more logical or arithmetic functions. The functions may be based on a received signal (e.g., from a sensor that measures a physical parameter as in the various examples described herein). Performance of the functions may cause an output of a signal (e.g., to control another device such as a switch or to provide an indication as in the various examples described herein). Such control devices comprise, by way of non-limiting examples, a digital signal processor (DSP), microprocessor, microcontroller, field programmable gate array (FPGA), application-specific integrated circuit (ASIC), embedded controller, analog comparator, analog-to-digital controller, digital-to-analog controller, etc., or combinations thereof. Such control devices may comprise or be connected to a memory that stores instructions that may be read, interpreted and executed by the devices, and based on the executed instructions, perform any one of functions or control as described herein. The terms "memory" or "data storage device" used herein comprise any volatile or non-volatile, non-transitory computer memory suitable to the presently disclosed subject matter (e.g., random-access memory (RAM), static random-access memory (SRAM), read-only memory (ROM), erasable programmable read-only memory (EPROM), electrically erasable programmable read-only memory (EEPROM), dynamic random-access memory (DRAM), etc.). The above may comprise any of the control circuitry disclosed herein. More specifically, by way of non-limiting example, the above may comprise the control circuitry 106, 206, 306, and/or 406 disclosed in the present application. Control devices may be included or connected to interface hardware, that converts signals from other devices (e.g., sensors) to signals compatible with the control device (e.g., a comparator or analog to digital (A/D) converter that converts an analog signal to a digital signal), or that converts signals from the control device to signals compatible with another device (e.g., an amplifier for driving a control input of a switch). The control circuitry may be configured to output control signals to control an operational state (e.g., ON, OFF, opened, closed, etc.) of one or more switches.

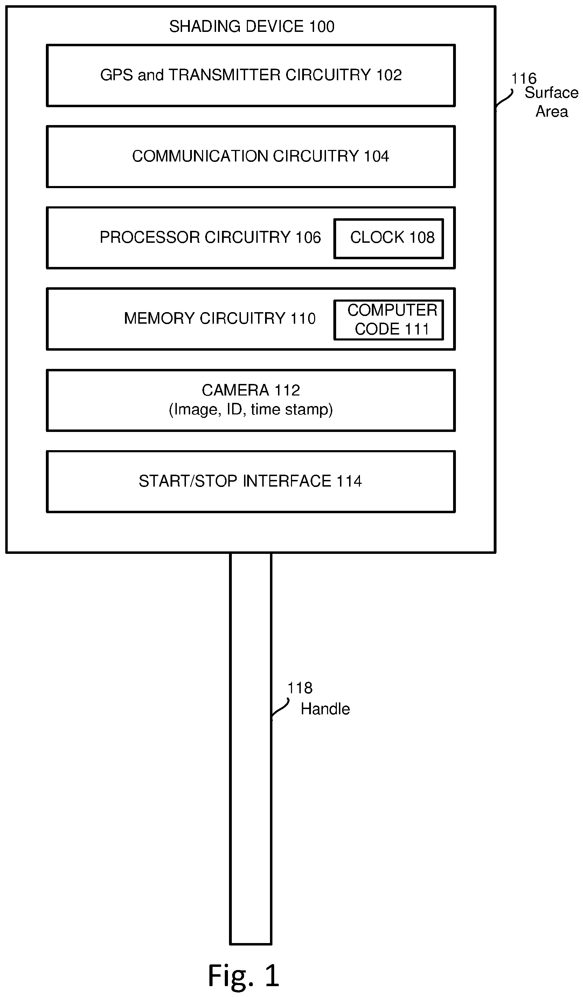

Reference is now made to FIG. 1, which shows a shading device 100 (e.g., a computing device). Shading device 100 may be a handheld device, a mobile device (e.g., a cellphone), a GPS device, an unmanned vehicle (e.g., an unmanned aerial vehicle), etc. Shading device 100 may comprise: GPS and transmitter circuitry 102, communication circuitry 104, processor circuitry 106, memory circuitry 110, camera 112, start/stop interface 114, surface area 116, and/or handle 118.

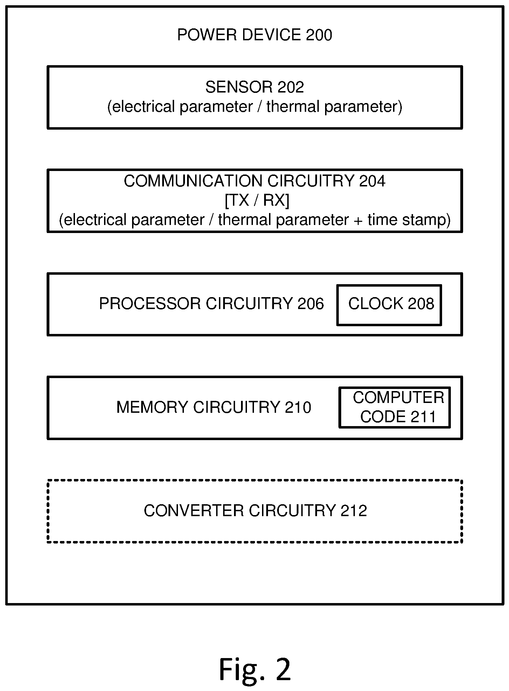

GPS and transmitter circuitry 102 may be configured to determine and transmit a GPS parameter. While this application refers to GPS and transmitter circuitry, and GPS parameter/location, other geocode and/or navigation systems (e.g., GLObalnaya NAvigatsionnaya Sputnikovaya Sistema (GLONASS), Beidou, Galileo, what3words, etc.) may also be used to determine and/or reference a location of a device. The GPS parameter may be part of what is referred to herein as GPS data or GPS location data. The shading device 100 (e.g., GPS and transmitter circuitry 102) may be separate from and external to the power device 200 in Fig. 2. Additionally, in some examples, the shading device 100 would not be permanently connected to the power device 200.

Returning to Fig. 1, GPS and transmitter circuitry 102 may be configured to transmit the GPS parameter to a power device 200, a mapping device 300, and/or a power and mapping device 400. A GPS parameter may be positional such as longitude, latitude, and/or altitude, or other information that indicates a location of shading device 100. A GPS parameter may also provide a quality indicator and/or number of satellites used to define a coordinate. The plurality of GPS parameters available may be used to determine the location and quality of the parameter data related to the shading device 100. For example, the GPS parameter may indicate a location (e.g., longitude, latitude, and/or altitude) of the shading device 100, and/or other devices in close proximity to the shading device 100. Additionally, a GPS parameter may have an associated Coordinated Universal Time (UTC) timestamp which may later be used to correlate data.

Communication circuitry 104 may be configured to transmit or receive data. Such data may comprise GPS parameters, identification data (also referred to herein as ID data), image data, timestamp data, etc. Communication circuitry 104 may be configured to perform wired (e.g., power line communication (PLC)) or wireless (e.g., wi-fi, mobile, Bluetooth, etc.) communications. Communication circuitry 104 may comprise transmitter circuitry and receiver circuitry. The transmitter circuitry may be configured to transmit data and/or communication signals, and the receiver circuitry may be configured to receive data and/or communication signals. For example, communication circuitry 104 may be configured to transmit data to a power device 200, a mapping device 300, and/or a power and mapping device 400. Communication circuitry 104 may be configured to receive data from the power device 200, the mapping device 300, and/or the power and mapping device 400.

Processor circuitry 106 may also be referred to as control circuitry or a controller. Processor circuitry 106 may be configured to obtain and process data (e.g., the data transmitted by communication circuitry 104). Such data may comprise GPS parameters, identification data, image data, timestamp data, etc. Identification and image data may be used to identify the PV module that is being shaded by shading device 100. A PV module may comprise one or more PV cells that comprise materials that generate electricity when exposed to light. The operation of the PV cells may depend on the amount of light that the PV module is exposed to. A PV module may be a PV power source. Identification data may comprise various types of data (e.g., a barcode, a serial number, and/or other information) that identifies the PV module. Image data may comprise one or more images of the PV module. The image data may comprise images of objects in proximity to shading device 100. For example, the images may comprise bar codes, serial numbers, identification information of PV modules, and/or PV modules. The PV module may be identified from the one or more images based on image recognition techniques (e.g., using artificial intelligence). For example, images of bar codes may be used (e.g., scanned) to serialize the data collected by shading device 100. Serializing data may help with mapping GPS location to a change (e.g., a drop or an increase) in a PV module electrical parameter. Camera 112 may be configured to obtain images associated with shading device 100. The PV module may be identified based on a change in an operational parameter related to the PV module (e.g., change in power production, change in voltage, change in current, change in temperature, etc.). Processor circuitry 106 may be configured to generate or receive control signals. The one or more control signals may be configured to control one or more elements of shading device 100 (e.g., transmitter circuitry, receiver circuitry, one or more switches, etc.). One or more control signals may be generated based on computer code.

Timestamp data may comprise the date and time in hours, minutes, seconds, and/or fractions of a second that an event took place. An event may comprise receiving GPS parameter data. At the time GPS parameter data may be received by processor circuitry 106, a clock 108 may log the time in the form of a timestamp. This timestamp may be associated with the GPS parameter data within memory circuitry 110 (e.g., in a table). Processor circuitry 106 may comprise clock 108. Clock 108 may be configured to produce the timestamp data that may be associated with other data (e.g., GPS data, identification data, image data, etc.). For example, the timestamp data may be used to corroborate with other data for determining the location of the PV module.

Processor circuitry 106 may be further configured to make determinations regarding the transmission of data. For example, processor circuitry 106 may be configured to determine when to transmit data and what data to transmit. In some examples, processor circuitry 106 may determine to transmit only one type of the identification data and the timestamp data if processor circuitry 106 determines that the one type of the identification data and the timestamp data are sufficient for mapping the PV module to a GPS location. Processor circuitry 106 may determine not to transmit certain data but may store that data in memory circuitry 110. By having processor circuitry 106, determining relevant data to transmit, this may reduce the necessary computing power downstream on other devices in the system.

Processor circuitry 106 may be further configured to transmit control signals. These control signals may comprise, discrete outputs from a processor to other circuitry within shading device 100. For example, a control signal may be an enable control signal to turn GPS and transmitter circuitry 102 on. In another example, a control signal may be a reset control signal to restart communication circuitry 104. Control signals may also comprise internal communication buses used to send commands to other circuitry within the shading device 100. This may include a universal asynchronous receiver-transmitter (UART) to communicate between the processor circuitry 106 and the GPS and transmitter circuitry 102.

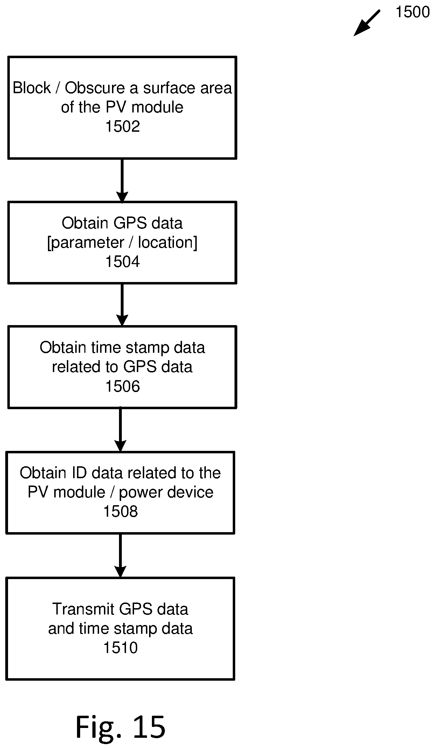

Memory circuitry 110 may be configured to store data (e.g., GPS data, identification data, image data, timestamp data etc.). Memory circuitry 110 may also store a computer code 111. The computer code 111 may include one or more computer readable instructions configured to control one or more elements of the shading device 100 to perform one or more steps of the processes detailed herein. For example, the computer code 111 may be configured to control the transmitter circuitry to transmit GPS data. As another example, computer code 111 may be configured to control the memory circuitry 110 to store GPS data. As a further example, computer code 111 may be configured to control processor circuitry 106 to perform one or more of steps 1504 to 1508 in Fig. 15.

Returning to Fig. 1, a start/stop interface 114 may be configured to generate a start signal configured to begin the obtaining of GPS location data, and to generate a stop signal configured to end the obtaining of GPS location data. A start/stop interface 114 may also be used to generate a start signal configured to begin the obtaining of image data, and to generate a stop signal configured to end the obtaining of image data. Manual input may be needed to control the start/stop interface 114. For example, an operator can initiate the start signal through a control panel on start/stop interface 114. An operator can hold shading device 100 and use start/stop interface 114 to control when to start obtaining of GPS location data and when to end the obtaining of GPS location data. Start/stop interface 114 may be useful to reduce power consumption of circuits such as the GPS and transmitter circuitry 102 and/or the camera 112. In some examples, computer code 111 may control start/stop interface 114. For example, computer code 111 may control start/stop interface 114 based on the shading device 100 being determined as being in a certain location (e.g., a first location, such as a start location, defined by a first set of GPS data, and a second location, such as a stop location, defined by a second set of GPS data).

A surface area 116 may be sized and shaped to shade at least a portion of a PV module and decrease power production of the PV module by shading and/or blocking light to at least a part of the PV module. Surface area 116 may be a part of the surface of shading device 100. A handle 118 may be an elongated stick and/or rod, configured to increase the height at which the shading device is positioned vertically. Handle 118 may be long if a PV module is on a roof. Handle 118 may allow shading device 100 to shade the PV module from a distance. Handle 118 may be adjustable in length (e.g., at least partially telescopic).

Reference is now made to FIG. 2, which shows a power device 200 (e.g., another computing device). Elements of power device 200 may be the same as, or similar to, elements of shading device 100 of FIG. 1. Power device 200 may comprise one or more of a PV module, a power converter, a direct current (DC)-DC converter, a DC-alternating current (AC) converter, an inverter, an AC-DC converter, a rectifier, a PV module converter, a PV string converter, a system converter, etc.

Power device 200 may comprise a sensor 202, communication circuitry 204, processor circuitry 206, memory circuitry 210, and converter circuitry 212. Sensor 202 may be configured to obtain an operational parameter associated with power device 200 and/or another power device connected to power device 200. The operational parameter may be an electrical and/or thermal parameter. Examples of operational parameters may be voltage, current, power (e.g., power condition), irradiation, and/or temperature. For example, sensor 202 may be configured to obtain an output voltage of power device 200. As another example, sensor 202 may be configured to obtain an output current of power device 200. As a further example, sensor 202 may be configured to obtain a temperature of power device 200. For example, based on at least a portion of the PV module being shaded, the PV module and/or other power device connected to the PV module may change output voltage, output current, temperature, etc. For example, based on at least a portion of the PV module being shaded, the PV module may decrease output voltage. As another example, based on at least a portion of the PV module being shaded, the PV module may decrease output current. As a further example, based on at least a portion of the PV module being shaded, the PV module may increase in temperature.

Communication circuitry 204 may be configured to transmit or receive the operational parameter (e.g., electrical and/or thermal parameter), and/or timestamp data. Timestamp data may comprise the date and time in hours, minutes, seconds, and/or fractions of a second that an event took place. An event may comprise determining (e.g., measuring, detecting) an electrical and/or thermal parameter associated with power device 200, and/or determining a change in the electrical and/or thermal parameter associated with power device 200. Communication circuitry 204 may be configured to perform wired (e.g., power line communication (PLC)) or wireless (e.g., wi-fi, mobile, Bluetooth, etc.) communications. Communication circuitry 204 may comprise transmitter circuitry and receiver circuitry. The transmitter circuitry may be configured to transmit data and/or communication signals, and the receiver circuitry may be configured to receive data and/or communication signals. For example, communication circuitry 204 may be configured to transmit the electrical and/or thermal parameter to processor circuitry 206, shading device 100, mapping device 300, and/or power and mapping device 400. Communication circuitry 204 may be configured to receive data from processor circuitry 206, shading device 100, mapping device 300, and/or power and mapping device 400.

Processor circuitry 206 may also be referred to as control circuitry or a controller. Processor circuitry 206 may be configured to obtain and process data (e.g., the data transmitted by communication circuitry 204). Processor circuitry 206 may be part of a central computer or server in proximity to a PV module, or in a cloud. Processor circuitry 206 may comprise a clock 208. At the time the electrical and/or thermal parameter may be received by processor circuitry 206, the clock 208 may log the time in the form of a timestamp. Based on a comparison of the timestamp with another timestamp associated with GPS parameter, this timestamp may be associated with the GPS parameter data and/or power device 200 within memory circuitry 210 (e.g., in a table). Clock 208 may be configured to produce the timestamp data that may be associated with other data (e.g., GPS data, identification data, image data, etc.). For example, the timestamp data may be used to corroborate with other data for determining the location of the PV module. Processor circuitry 206 may be configured to generate or receive control signals. The one or more control signals may be configured to control one or more elements of power device 200 (e.g., transmitter circuitry, receiver circuitry, one or more switches, etc.). One or more control signals may be generated based on computer code.

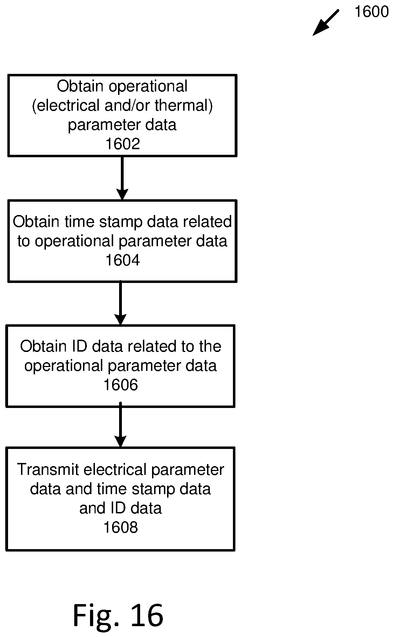

Memory circuitry 210 may be configured to store data (e.g., the electrical and/or thermal parameter, timestamp data etc.). Memory circuitry 210 may also store a computer code 211. The computer code 211 may include one or more computer readable instructions configured to control one or more elements of the power device 200 to perform one or more steps of the processes detailed herein. For example, the computer code 211 may be configured to control the transmitter circuitry to transmit data. As another example, computer code 211 may be configured to control the memory circuitry 210 to store data. As a further example, computer code 211 may be configured to control processor circuitry 206 to perform one or more of steps 1602 to 1606 in Fig. 16.

Converter circuitry 212 may comprise, for example, one or more: DC to DC converters (e.g., buck converters, boost converters, buck/boost converters, buck + boost converters, etc.), DC to AC converters (may also be referred to as inverters), combiner and/or monitoring boxes, etc. The inverters of power system 200 may be for one or more phases (e.g., one phase inverter, two phase inverter, three phase inverter, etc.), and may comprise lines or phases that are not shown herein for the sake of simplicity. Converter circuitry may be configured to convert an input power to an output power. Converter circuitry 212 may be connected to a power source such as charge storage circuitry or power generation circuitry. For example, if power device 200 is a PV module, it might not include converter circuitry 212. As another example, if power device 200 is a power converter it may include converter circuitry 212. The power converter may be connected to a different power device (e.g., a PV module or another power converter). The type of converter circuitry 212 may depend on the type of power converter that it is part of and the designated function of the power converter within a power system. For example, a system inverter may be connected to one or more PV modules. As another example, a system inverter may be connected to one or more other converters that may be each connected one or more PV modules. The system inverter may include AC-DC converter circuitry, DC-DC converter circuitry, DC-AC converter circuitry, etc. For example, one or more sensors may be connected to the converter circuitry 212 to sense one or more operational parameters associated with the converter circuitry 212. As an example, power device 200 may be one of a plurality of DC-DC converters, each DC-DC converter connected to the plurality of DC-DC converters (e.g., in series) and also connected to one or more respective PV modules.

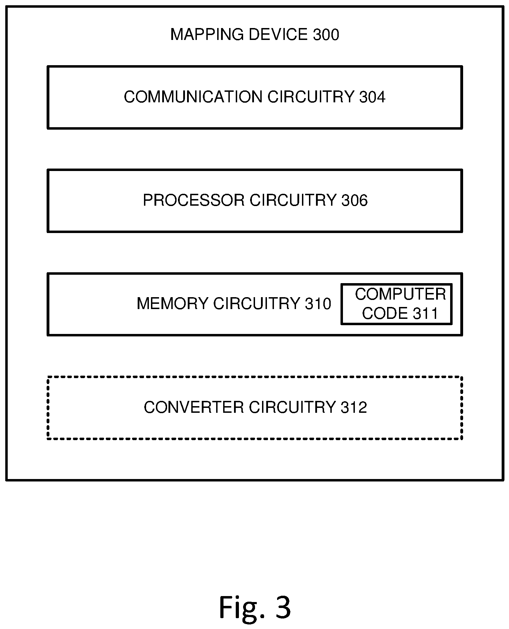

Reference is now made to FIG. 3, which shows a mapping device 300 (e.g., another computing device). Elements of mapping device 300 may be the same as, or similar to, elements of shading device 100 of FIG. 1 or power device 200 of FIG. 2. Mapping device 300 may be a server, a PV module, power converter, DC-DC converter, DC-AC converter, inverter, AC-DC converter, rectifier, PV module converter, PV string converter, system converter, etc. Mapping device 300 may also be an external standalone device, or part of shading device 100, or power device 200.

Mapping device 300 may comprise: communication circuitry 304, processor circuitry 306, memory circuitry 310, and/or converter circuitry 312. Communication circuitry 304 may be configured to transmit or receive data. Such data may comprise GPS parameters, identification data, image data, timestamp data, operational parameters, etc. Communication circuitry 304 may be configured to perform wired (e.g., power line communication (PLC)) or wireless (e.g., wi-fi, mobile, Bluetooth, etc.) communications. Communication circuitry 304 may comprise transmitter circuitry and receiver circuitry. The transmitter circuitry may be configured to transmit data and/or communication signals, and the receiver circuitry may be configured to receive data and/or communication signals. For example, communication circuitry 304 may be configured to transmit data to shading device 100, power device 200, and/or a power and mapping device 400. Communication circuitry 304 may be configured to receive data from shading device 100, power device 200, and/or power and mapping device 400. As an example, communication circuitry 304 may be configured to receive electrical and/or thermal parameter, and/or timestamp data from communication circuitry 204. Communication circuitry 304 may be configured to receive GPS parameters and/or timestamp data from communication circuitry 104.

Processor circuitry 306 may also be referred to as control circuitry or a controller. Processor circuitry 306 may be part of a central computer or server in proximity to a PV module, or in a cloud. Processor circuitry 306 may be configured to obtain and process data (e.g., the data transmitted by communication circuitry 304). Processor circuitry 306 may be configured to map a PV module to a GPS location indicated by the GPS parameter. For example, processor circuitry 306 may be configured to map a PV module to a GPS location based on that a first timestamp associated with the PV module matches (e.g., the same as, or substantially similar to) a second timestamp associated with the GPS parameter. Processor circuitry 306 may be configured to map an ID of the PV module to the GPS location. The ID of the PV module may comprise at least one of: an identification number, a serial number, a bar code, information that indicates a location of the PV module in a blockchain, information that indicates a location of the PV module relative to other PV modules (e.g., an order of the PV modules in a serial string of connected PV modules and/or power converters), etc. Processor circuitry 306 may be configured to map a plurality of IDs of a plurality PV modules to a plurality of GPS locations. The plurality of PV modules may form one or more PV arrays or may be part of a PV array. Based on the mapping of a plurality PV modules to a plurality of GPS locations, Processor circuitry 306 may be configured to determine the location of one or more PV arrays. Processor circuitry 306 may be configured to generate or receive control signals. The one or more control signals may be configured to control one or more elements of shading device 100 (e.g., transmitter circuitry, receiver circuitry, one or more switches, etc.). One or more control signals may be generated based on computer code.

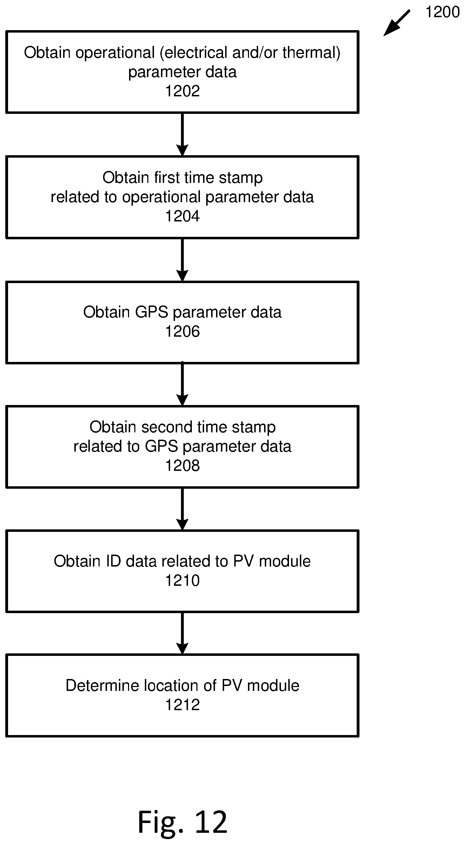

Processor circuitry 306 may be configured to create one or more databases (e.g., a table) to store the mapping relationships of each of the PV modules. The databases may indicate an ID of each of the PV module and a corresponding GPS location. The databases may group one or more PV modules based on their locations (e.g., if the distance between two PV modules is below a threshold). The databases may be stored in memory circuitry 310. Memory circuitry 310 may also store a computer code 311. The computer code 311 may include one or more computer readable instructions configured to control one or more elements of the mapping device 300 to perform one or more steps of the processes detailed herein. For example, the computer code 311 may be configured to control the receiver circuitry to receive data. As another example, computer code 311 may be configured to control the memory circuitry 310 to store data. As a further example, computer code 311 may be configured to control processor circuitry 306 to perform one or more of steps 1202 to 1212 in Fig. 12.

Converter circuitry 312 may comprise, for example, one or more: DC to DC converters (e.g., buck converters, boost converters, buck/boost converters, buck + boost converters, etc.), DC to AC converters (may also be referred to as inverters), combiner and/or monitoring boxes, etc. The inverters of power system 300 may be for one or more phases (e.g., one phase inverter, two phase inverter, three phase inverter, etc.), and may comprise lines or phases that are not shown herein for the sake of simplicity. Converter circuitry 312 may be configured to convert an input power to an output power. Converter circuitry 312 may be similar to converter circuitry 312 described above.

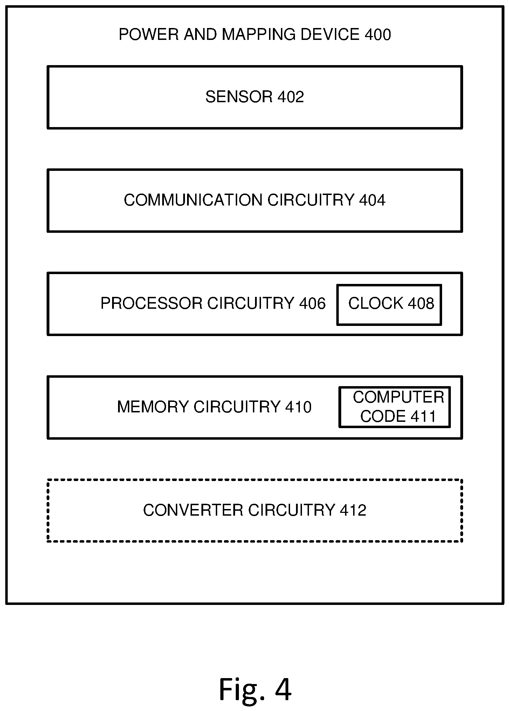

Reference is now made to FIG. 4, which shows a power and mapping device 400 (e.g., another computing device). Elements of power and mapping device 400 may be the same as, or similar to, elements of shading device 100 of FIG. 1, power device 200 of FIG. 2, and/or mapping device 300 of FIG. 3. Power and mapping device 400 may be a PV module, power converter, DC-DC converter, DC-AC converter, inverter, AC-DC converter, rectifier, PV module converter, PV string converter, system converter, etc. Power and mapping device 400 may perform the functions of power device 200 and mapping device 300, and comprise all the circuitry necessary to perform those functions.

Power and mapping device 400 may comprise: sensor 402, communication circuitry 404, processor circuitry 406, memory circuitry 410, and/or converter circuitry 412. Sensor 402 may be similar to sensor 202 described above, or perform same or similar functions as sensor 202 described above. Communication circuitry 404 may be similar to communication circuitry 104, communication circuitry 204, communication circuitry 304 described above. Communication circuitry 404 may be configured to transmit or receive data. Such data may comprise GPS parameters, identification data, image data, timestamp data, operational parameters, etc. For example, communication circuitry 404 may be configured to transmit data to shading device 100, power device 200, and/or mapping device 300. Communication circuitry 404 may be configured to receive data from shading device 100, power device 200, and/or mapping device 300.

Processor circuitry 406 may comprise clock 408 and may be similar to processor circuitry 106, 206, and 306 and clock 108 and 208 described above. Memory circuitry 410 may be similar to memory circuitry 110, 210, 310 described above. Converter circuitry 412 may be similar to converter circuitry 212, 312 described above.

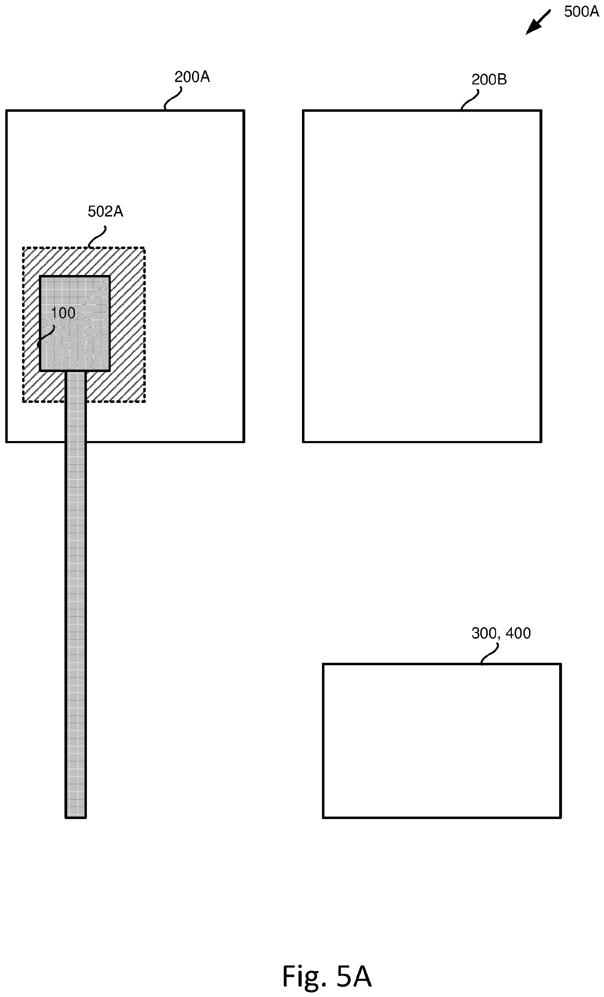

Reference is now made to FIG. 5A which shows an example system comprising shading device 100, power devices 200A and 200B, mapping device 300, and/or power and mapping device 400. In system 500A, shading device 100 may create a shadow 502A over a power device 200A, which may cause a drop (e.g., decrease) in power output of power device 200A. The drop in power may be determined based on a decrease of output voltage and/or a decrease of output current of the power device 200A. The decrease of output voltage and/or decrease of output current may be detected by diagnostic circuitry (e.g., sensors) built into the PV module. This diagnostic circuitry may use techniques not limited to, voltage dividers, current sense resistors, and/or hall effect sensors. As another example, the shadow 502A over power device 200A, may cause a change in temperature of power device 200A.

Shadow 502A may be caused by covering a part of power device 200A using the shading device 100. This may be achieved by an operator holding the shading device 100 above the power device 200A (e.g., for at least a period of time such as 10 seconds), by an unmanned aerial vehicle (e.g., a drone) carrying shading device and flying above power device 200A, and/or other methods that block light (e.g., sunlight) to at least a part of power device 200A. A size of shadow 502A may correspond to the size of the shading device 100 (e.g., surface area 116 of shading device 100). The drop in power output of power device 200A along with a first timestamp associated with the drop in power output of power device 200A, and the GPS location of shading device 100 along with a second timestamp associated with the GPS location of shading device 100 may be transmitted to mapping device 300 and/or power and mapping device 400. The first timestamp may indicate a time that the drop in power output of power device 200A is determined. The second timestamp may indicate a time that the GPS location of shading device 100 is determined.

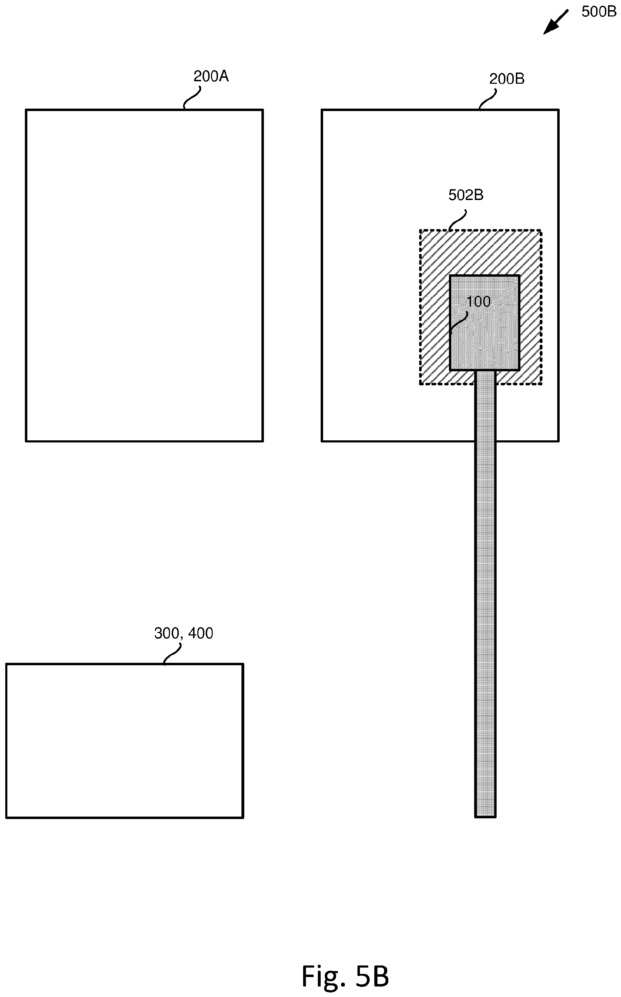

Reference is now made to FIG. 5B. In system 500B, shading device 100 may create a shadow 502B over a power device 200B, which may cause a drop in power output of power device 200B. The drop in power output of power device 200B along with a third timestamp, and the GPS location of shading device 100 along with a fourth timestamp may be transmitted to mapping device 300 and/or power and mapping device 400. Mapping device 300 and/or power and mapping device 400 may use the received data to determine (e.g., map) the locations of power device 200A and 200B based on their GPS data (e.g., GPS coordinates), decrease in power output, and correlated timestamps. Mapping device 300 and/or power and mapping device 400 may also map the locations of power device 200A relative to power device 200B. Additional details about the determining the locations of the power devices 200A and 200B are further described below. As another example, the shadow 502B over power device 200B, may cause a change in temperature of power device 200B which may be used to map a location of power device 200B.

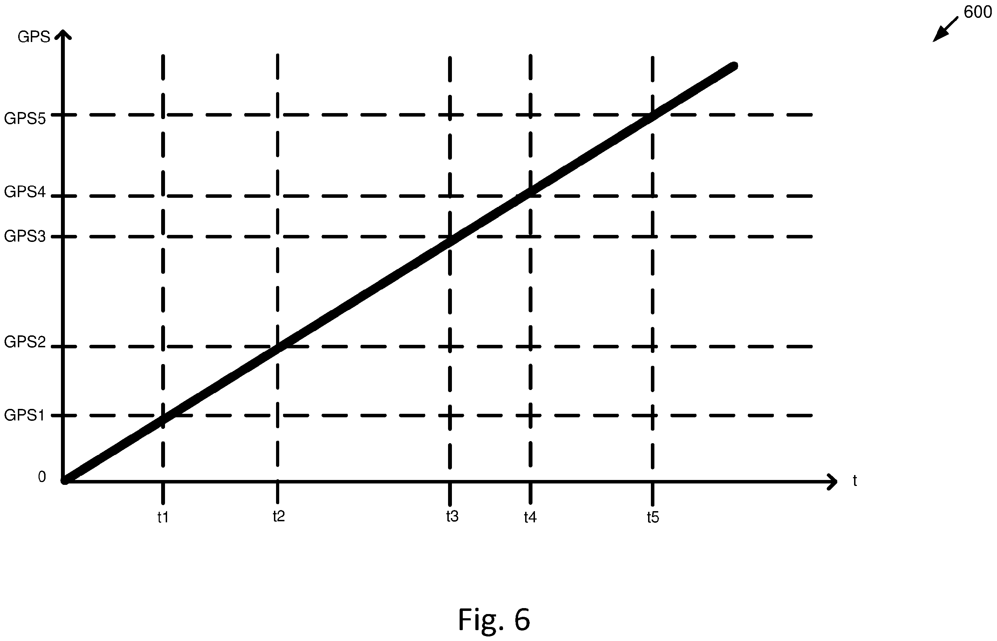

Reference is now made to FIG. 6, which shows an example graph 600. The graph 600 of FIG. 6 is described below. At time t1, GPS and transmitter circuitry 102 determines that the GPS location data (e.g., GPS coordinates) of shading device 100 is GPS1. Between time t1 and t2, shading device 100 may be moved to a new location. At time t2, GPS and transmitter circuitry 102 determines that the GPS location data of shading device 100 is GPS2. Between time t2 and t3, shading device 100 may be moved to a new location different from GPS1 and GPS2. At time t3, GPS and transmitter circuitry 102 determines that the GPS location data of shading device 100 is GPS3. Between time t3 and t4, shading device 100 may be moved to a new location different from GPS1, GPS2, and GPS3. At time t4, GPS and transmitter circuitry 102 determines that the GPS location data of shading device 100 is GPS4. Between time t4 and t5, shading device 100 may be moved to a new location different from GPS1, GPS2, GPS3, and GPS4. At time t5, GPS and transmitter circuitry 102 determines that the GPS location data of shading device 100 is GPS5. A respective timestamp (e.g., t1, t2, t3, t4, t5) may be assigned to and/or associated with each GPS location data GPS1 through GPS5 and transmitted by communication circuitry 104 and stored in memory 110.

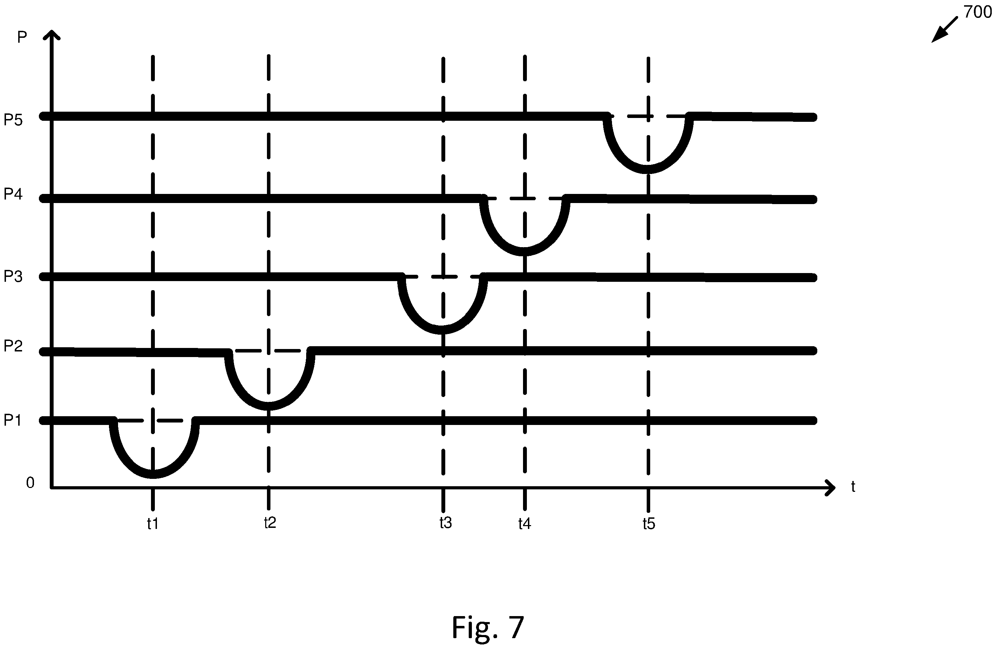

Reference is now made to FIG. 7, which shows an example graph 700. The graph 700 of FIG. 7 is described below. At time 11, sensor 202 and/or 402 along with processor circuitry 206 and/or 406 determines that the power data of a first PV module is below the value P1. P1 may be an expected power value of the first PV module at t1 (e.g., based on the parameters of circuits in the first PV module, historical data associated with the first PV module). The power data may comprise a value determined (e.g., calculated, received) by processor circuitry 206 and/or 406 based on a voltage and current measured by sensor 202 and/or 402. P1 may be a measured power value or a normalized power value based on measurements (e.g., based on an average of measurements, or with a plurality of measurements normalized to fit within certain threshold ranges of values). P1 may represent the power produced by a given PV module in the absence of shading device shading the given PV module. PV module may produce power value P1 before and after t1 (with the drop in power and recovery taking some amount of time). One or more sensors and/or processors may be configured to determine P1 on a relatively constant basis, or at a series or time intervals (which may be relatively close in time to one another). At time t2, sensor 202 and/or 402 along with processor circuitry 206 and/or 406 determines that the power data of a second PV module is below the value P2. P2 may be an expected power value of the second PV module at t2 (e.g., based on the parameters of circuits in the second PV module, historical data associated with the second PV module). P2 may be a measured power value or a normalized power value based on measurements (e.g., based on an average of measurements, or with a plurality of measurements normalized to fit within certain threshold ranges of values). P2 may represent the power produced by a given PV module in the absence of shading device shading the given PV module. PV module may produce power value P2 before and after t2 (with the drop in power and recovery taking some amount of time). One or more sensors and/or processors may be configured to determine P2 on a relatively constant basis, or at a series or time intervals (which may be relatively close in time to one another). At time t3, sensor 202 and/or 402 along with processor circuitry 206 and/or 406 determines that the power data of a third PV module is below the value P3. P3 may be an expected power value of the third PV module at t3 (e.g., based on the parameters of circuits in the third PV module, historical data associated with the third PV module). P3 may be a measured power value or a normalized power value based on measurements (e.g., based on an average of measurements, or with a plurality of measurements normalized to fit within certain threshold ranges of values). P3 may represent the power produced by a given PV module in the absence of shading device shading the given PV module. PV module may produce power value P3 before and after t3 (with the drop in power and recovery taking some amount of time). One or more sensors and/or processors may be configured to determine P3 on a relatively constant basis, or at a series or time intervals (which may be relatively close in time to one another). At time t4, sensor 202 and/or 402 along with processor circuitry 206 and/or 406 determines that the power data of a fourth PV module is below the value P4. P4 may be an expected power value of the fourth PV module at t4 (e.g., based on the parameters of circuits in the fourth PV module, historical data associated with the fourth PV module). P4 may be a measured power value or a normalized power value based on measurements (e.g., based on an average of measurements, or with a plurality of measurements normalized to fit within certain threshold ranges of values). P4 may represent the power produced by a given PV module in the absence of shading device shading the given PV module. PV module may produce power value P4 before and after t4 (with the drop in power and recovery taking some amount of time). One or more sensors and/or processors may be configured to determine P4 on a relatively constant basis, or at a series or time intervals (which may be relatively close in time to one another). At time t5, sensor 202 and/or 402 along with processor circuitry 206 and/or 406 determines that the power data of a fifth PV module is value P5. P5 may be an expected power value of the fifth PV module at t5 (e.g., based on the parameters of circuits in the fifth PV module, historical data associated with the fifth PV module). P5 may be a measured power value or a normalized power value based on measurements (e.g., based on an average of measurements, or with a plurality of measurements normalized to fit within certain threshold ranges of values). P5 may represent the power produced by a given PV module in the absence of shading device shading the given PV module. PV module may produce power value P5 before and after t5 (with the drop in power and recovery taking some amount of time). One or more sensors and/or processors may be configured to determine P5 on a relatively constant basis, or at a series or time intervals (which may be relatively close in time to one another). P1-P5 be similar in value.

One or more power devices 200 and/or power and mapping device 400 may generate relatively constant power (e.g., from t1 to t5, the expected value). There may be power dips and/or changes such as a decrease in power production by the PV module(s), caused by shading of the PV module(s) with the shading device 100. Sensor 202 and/or 402 may sense electrical parameters such as voltage and current of the PV module and processor circuitry 206 and/or 406 may calculate power data based on the electrical parameters. A respective timestamp may be assigned to and/or associated with each power data P1 through P5 and transmitted by communication circuitry 204 and/or 404 and stored in memory 210 and/or 410.

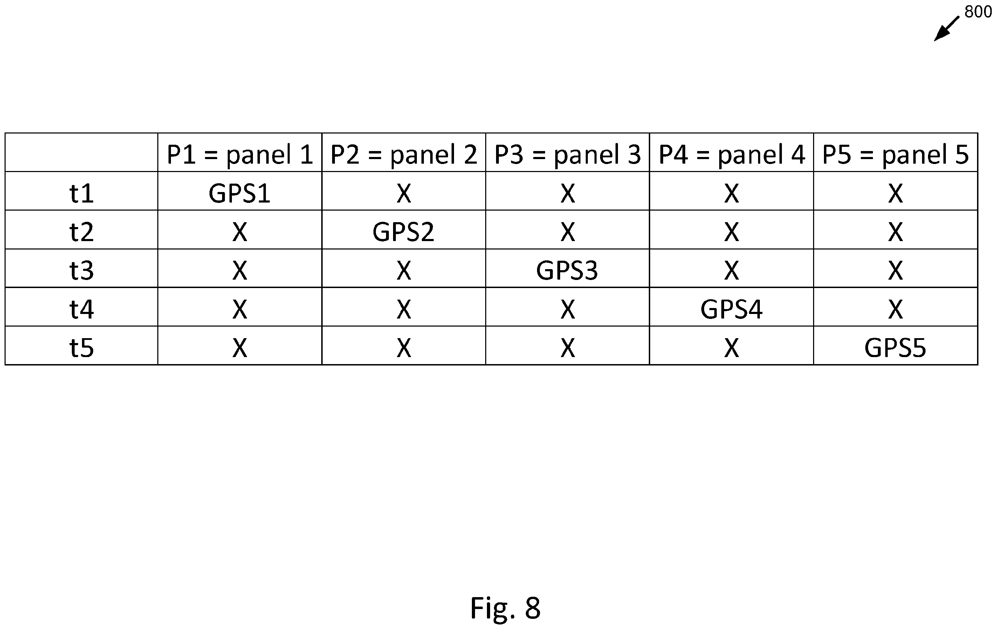

In FIG. 8, table 800 represents the data stored in computer memory 110 of mapping device 100. Each power decrease in power data has an associated timestamp and an associated PV module which can then be matched to an associated GPS location via the timestamp.

As shown in FIG. 8, at time t1 there is a power decrease relative to P1 in the power output of panel 1 and GPS data GPS1, mapping device 300 and/or power and mapping device 400 may determine that panel 1 with power decrease relative to P1 has a GPS location of GPS1. Processor circuitry 306 and/or 406 may map panel 1 to GPS location GPS1 (e.g., associate panel 1 with a GPS location GPS1). At timestamp t2 there is a power decrease relative to P2 and GPS data GPS2, mapping device 300 and/or power and mapping device 400 may determine that panel 2 with power decrease relative to P2 has GPS location of GPS2. Processor circuitry 306 and/or 406 may map panel 2 at GPS location GPS2. For timestamp t3 there is a power decrease relative to P3 and GPS data GPS3, mapping device 300 and/or power and mapping device 400 may determine that panel 3 with power decrease relative to P3 has GPS location of GPS3. Processor circuitry 306 and/or 406 may map panel 3 at GPS location GPS3. At timestamp t4 there is a power decrease relative to P4 and GPS data GPS4, mapping device 300 and/or power and mapping device 400 may determine that panel 4 with power decrease relative to P4 has GPS location of GPS4. Processor circuitry 306 and/or 406 may map panel 4 at GPS location GPS4. At timestamp t5 there is a power decrease relative to P5 and GPS data GPS5, mapping device 300 and/or power and mapping device 400 may determine that panel 5 with power decrease relative to P5 has GPS location of GPS5. Processor circuitry 306 and/or 406 may map panel 5 at GPS location GPS5.

For one or more of the above measurements, there may be a delay in power decrease which may cause the power decrease data to be the timestamp plus a time delay away from the GPS data. A delay threshold (e.g., a time range) may be incorporated into computer code 311 and/or 411 to allow for discrepancies in timestamp data between shading device 100 and power device 200 and/or power and mapping device 400.

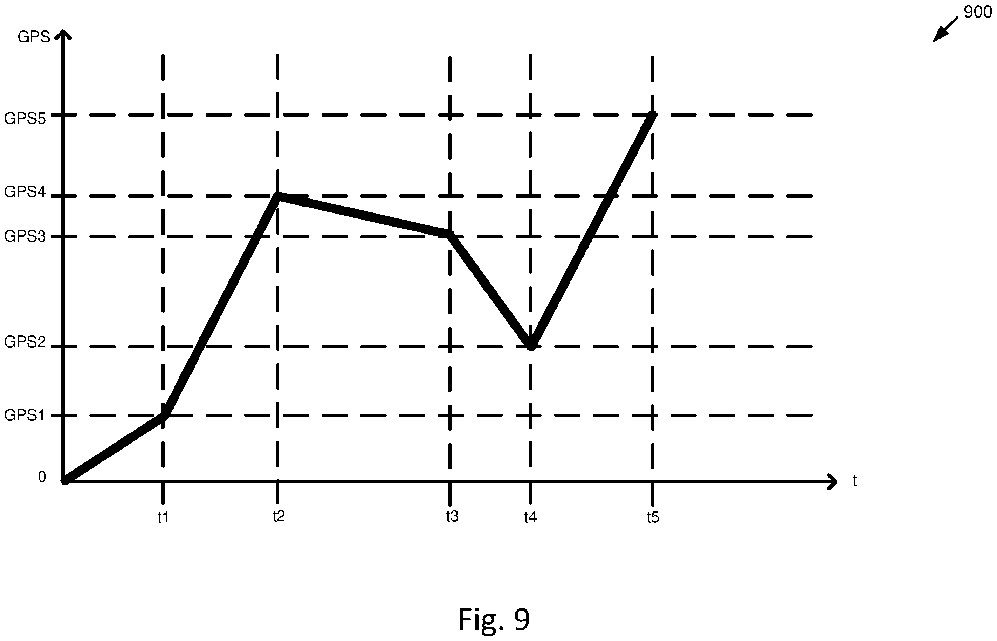

Reference is now made to FIG. 9, which shows an example graph 900. The graph 900 of FIG. 9 is described below. As shown in FIG. 9, at time t1, GPS and transmitter circuitry 102 determines that the GPS location data of shading device 100 is GPS1. At time t2, GPS and transmitter circuitry 102 determines that the GPS location data of shading device 100 is GPS4. At time t3, GPS and transmitter circuitry 102 determines that the GPS location data of shading device 100 is GPS3. At time t4, GPS and transmitter circuitry 102 determines that the GPS location data of shading device 100 is GPS2. At time t5, GPS and transmitter circuitry 102 determines that the GPS location data of shading device 100 is GPS5. A respective timestamp may be assigned to and/or associated with each GPS location data GPS1 through GPS5 and transmitted by communication circuitry 104 and stored in memory 110. This mapping may occur, for example, if a person or drone with shading device 100 does not follow a straight line.

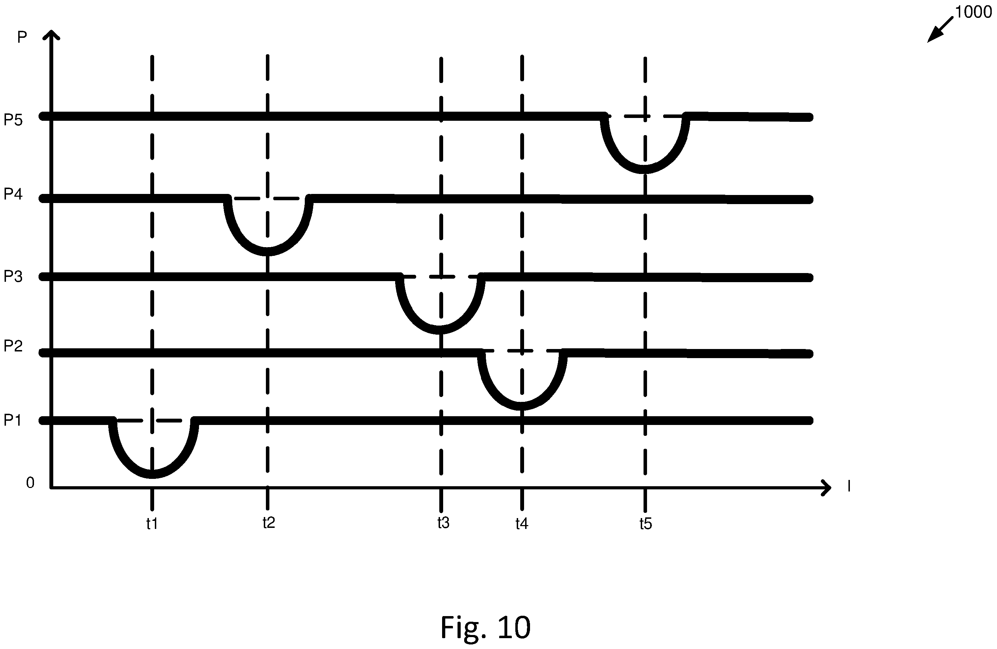

Reference is now made to FIG. 10, which shows an example graph 1000. The graph 1000 of FIG. 10 is described below. At time t1, sensor 202 and/or 402 along with processor circuitry 206 and/or 406 determines that the power data of a first PV module is below the value P1. P1 may be an expected power value of the first PV module at t1. P1 may be a measured power value or a normalized power value based on measurements. At time t2, sensor 202 and/or 402 along with processor circuitry 206 and/or 406 determines that the power data of a second PV module is below the value P4. P4 may be an expected power value of the second PV module at t2. P4 may be a measured power value or a normalized power value based on measurements At time t3, sensor 202 and/or 402 along with processor circuitry 206 and/or 406 determines that the power data of a third PV module is below the value P3. P3 may be an expected power value of the third PV module at t3. P3 may be a measured power value or a normalized power value based on measurements. At time t4, sensor 202 and/or 402 along with processor circuitry 206 and/or 406 determines that the power data of a fourth PV module is below the value P2. P2 may be an expected power value of the fourth PV module at t4. P2 may be a measured power value or a normalized power value based on measurements. At time t5, sensor 202 and/or 402 along with processor circuitry 206 and/or 406 determines that the power data of a fifth PV module is below the value P5. P5 may be an expected power value of the fifth PV module at t5. P5 may be a measured power value or a normalized power value based on measurements. This mapping may occur, for example, if a person or drone with shading device 100 does not follow a straight line.

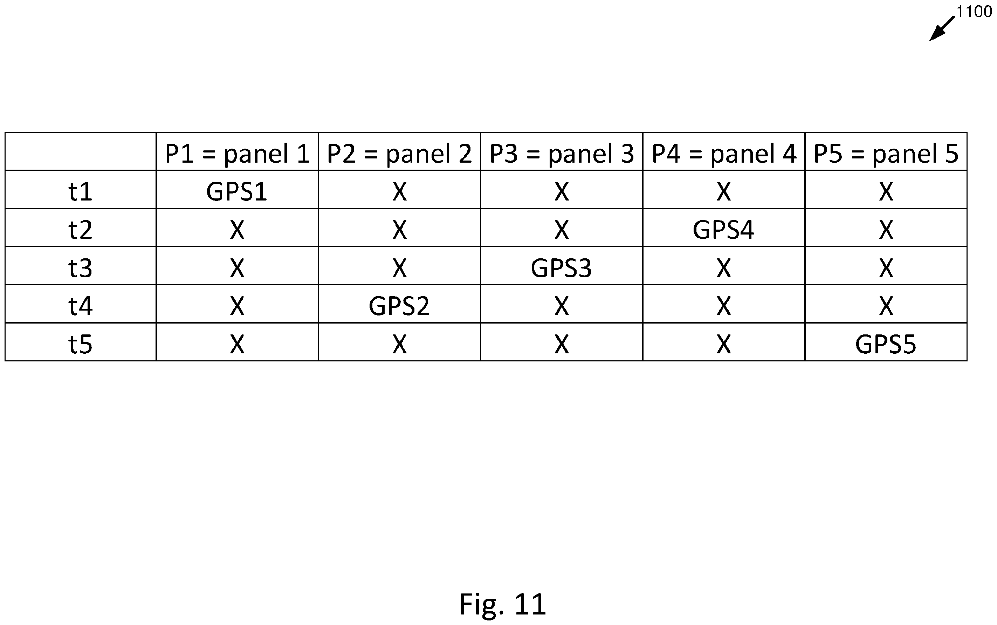

In FIG. 11, table 1100 may represent the data stored in computer memory 110 of mapping device 100. Each power decrease in power data may have an associated timestamp and an associated PV module which can then be matched to an associated GPS location via the timestamp. At timestamp t1 there is a power decrease relative to P1 and GPS data GPS1, mapping device 300 and/or power and mapping device 400 may determine that panel 1 with power decrease relative to P1 has a GPS location of GPS1. Processor circuitry 306 and/or 406 may map panel 1 at GPS location GPS1. At timestamp t2 there is a power decrease relative to P4 and GPS data GPS4, mapping device 300 and/or power and mapping device 400 may determine that panel 4 with power decrease relative to P4 has GPS location of GPS4. Processor circuitry 306 and/or 406 may map panel 4 at GPS location GPS4. At timestamp t3 there is a power decrease relative to P3 and GPS data GPS3, mapping device 300 and/or power and mapping device 400 may determine that panel 3 with power decrease relative to P3 has GPS location of GPS3. Processor circuitry 306 and/or 406 may map panel 3 at GPS location GPS3. At timestamp t4 there is a power decrease relative to P2 and GPS data GPS2, mapping device 300 and/or power and mapping device 400 may determine that panel 2 with power decrease relative to P2 has GPS location of GPS2. Processor circuitry 306 and/or 406 may map panel 2 at GPS location GPS2. At timestamp t5 there is a power decrease relative to P5 and GPS data GPS5, mapping device 300 and/or power and mapping device 400 may determine that panel 5 with power decrease relative to P5 has GPS location of GPS5. Processor circuitry 306 and/or 406 may map panel 5 at GPS location GPS5.

Reference is now made to FIG. 12 which shows an example method 1200 for determining a location of a PV module (e.g., a PV source, power device 200) based upon collected data. While the description below describes that mapping device 300 performs the steps, method 1200 may be performed by shading device 100, power device 200, mapping device 300, and/or power and mapping device 400.

In step 1202, mapping device 300 may obtain operational parameter data (e.g., electrical and/or thermal parameter data) of a PV module. For example, mapping device 300 may receive the operational parameter data of the PV module from power device 200. The operational parameter data may then be stored in memory circuitry 310.

In step 1204, mapping device 300 may obtain a first timestamp related to the operational parameter data. For example, mapping device 300 may receive the first timestamp from power device 200. The first timestamp may indicate a time that the operational parameter data is obtained (e.g., measured, determined) by power device 200 (e.g., via the sensor 202). The first timestamp may be stored in memory circuitry 310.

In step 1206, mapping device 300 may obtain GPS parameter data associated with a computing device (e.g., shading device 100). The computing device may be used to shade a part of the power module. For example, mapping device 300 may receive the GPS parameter data from the computing device. The GPS parameter data may indicate a location of the computing device. The GPS parameter data may be stored in memory circuitry 310. The computing device (e.g., shading device 100 with GPS circuitry) may be separate from and external to the power module. Additionally, in some examples, the shading device 100 would not be permanently connected to the power module.

In step 1208, mapping device 300 may obtain a second timestamp related to the GPS parameter data. For example, mapping device 300 may receive the second timestamp from the computing device. The second timestamp may indicate a time that the GPS parameter data is obtained (e.g., measured, determined) by the computing device (e.g., via the GPS and transmitter circuitry 102). The computing device may use a clock (e.g., clock 108) to determine the second timestamp. The second timestamp may be stored in memory circuitry 310.

In step 1210, mapping device 300 may obtain ID data related to the PV module. For example, mapping device may receive the ID data related to the PV module from the computing device. The computing device may use a camera (e.g., camera 112) to determine ID data of the PV module. The ID data may comprise a PV module ID number, barcode, and/or a PV module image. Additionally or alternatively, mapping device may receive the ID data related to the PV module from a different computing device (e.g., a server, power device 200) that detects a change in power of the PV module (e.g., among a plurality of PV modules installed in the area near the computing device) and transmit the ID data of the PV module. The ID data may be stored in memory circuitry 310. The ID data may be determined based on a change in an operational parameter in a given PV module. For example, the mapping device may determine the ID data related to the PV module based on a drop in power of the PV module.

In step 1212, mapping device 300 may determine a location of the PV module based on the operational parameter data, the GPS parameter data, the first timestamp, the second timestamp, and/or the ID data. For example, mapping device 300 may determine a location of the PV module to be the location of the computing device (or very close to the location of the computing device) based on that the first timestamp matches (e.g., the same as, substantially similar to) the second timestamp. The location of the PV module may be stored in memory circuitry 310. The location of the PV module may be associated with the ID data (which may also be stored in memory circuitry).

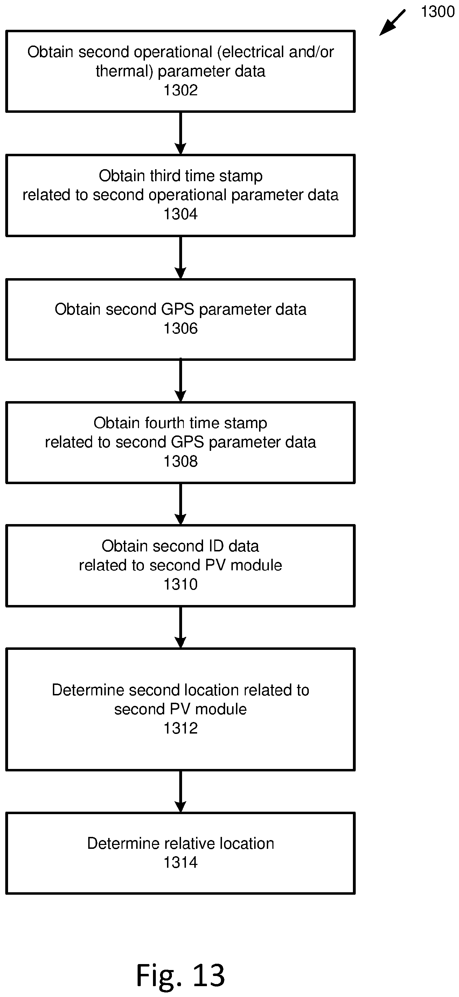

Reference is now made to FIG. 13 which shows an example method 1300 for determining a location of a second PV module based upon collected data. While the description below describes that mapping device 300 performs the steps, method 1300 may be performed by shading device 100, power device 200, mapping device 300, and/or power and mapping device 400.

In step 1302, mapping device 300 may obtain operational parameter data (e.g., electrical and/or thermal parameter data) of a second PV module. The second PV module may be different from the PV module. The second PV module may be next to the PV module, and in a same PV array of the PV module. For example, mapping device 300 may receive the operational parameter data of the second PV module from power device 200. The second operational parameter data may then be stored in memory circuitry 310.

In step 1304, mapping device 300 may obtain a third timestamp related to the operational parameter data of the second PV module. For example, mapping device 300 may receive the third timestamp from power device 200. The third timestamp may indicate a time that the operational parameter data of the second PV module is obtained by power device 200. The third timestamp may indicate a later time than the first timestamp and the second timestamp. The third timestamp may be stored in memory circuitry 310.

In step 1306, mapping device 300 may obtain second GPS parameter data associated with a computing device (e.g., shading device 100). The computing device may be used to shade a part of the power module. For example, mapping device 300 may receive the second GPS parameter data from the computing device. The second GPS parameter data may indicate a second location of the computing device. The second location may be different than the location of the computing device determined in step 1206. The computing device may move from the location to the second location (e.g., from the second timestamp to the fourth timestamp determined in step 1308). The second GPS parameter data may be stored in memory circuitry 310.

In step 1308, mapping device 300 may obtain a fourth timestamp related to the second GPS parameter data. For example, mapping device 300 may receive the fourth timestamp from the computing device. The fourth timestamp may indicate a time that the second GPS parameter data is obtained by the computing device. The computing device may use a clock (e.g., clock 108) to determine the fourth timestamp. The fourth timestamp may be stored in memory circuitry 310.

In step 1310, mapping device 300 may obtain second ID data related to the second PV module. For example, mapping device may receive the second ID data related to the second PV module from the computing device. The second ID data may be stored in memory circuitry 310. The ID data may be determined based on a change in an operational parameter in the second PV module. For example, the mapping device may determine the ID data related to the second PV module based on a drop in power of the second PV module.

In step 1312, mapping device 300 may determine a location of the second PV module based on the second operational parameter data, the second GPS parameter data, the third timestamp, the fourth timestamp, and/or the second ID data. For example, mapping device 300 may determine a location of the second PV module to be the location of the computing device at the fourth timestamp (or very close to the location of the computing device) based on that the third timestamp matches (e.g., the same as, substantially similar to) the fourth timestamp. The location of the second PV module may be stored in memory circuitry 310. The location of the second PV module may be associated with the second ID data (which may also be stored in memory circuitry).

In step 1314, mapping device 300 may determine the location of the first PV module relative to the second PV module. In addition, based on the location of the PV module and the location of the second PV module, mapping device 300 may determine (e.g., create, form) a PV map (e.g., PV chart) that indicates the location of the PV module and the location of the second PV module, for example, based on the relative location between the first PV module and the second PV module. The relative location and the PV map may be stored in memory circuitry 310. The above steps described in method 1200 and method 1300 may be performed for a plurality of PV modules (e.g., based on the movement of the computing device that affect the operational parameter data of the respective PV modules). The plurality of PV modules may be connected to the PV module (e.g., in series). The plurality of PV modules may be connected to each other in series or in parallel. The mapping device may map the relative location of the first PV module and the second PV module using the first ID data and the second ID data, and the first GPS position data and the second GPS position data (which may all be stored in memory circuitry).

In this way, the PV map may indicate the location of each of the plurality of PV modules and the relative locations of the PV modules. Based on the topology associated with the PV arrays and the PV modules, the PV map may also indicate the location of each of a plurality of PV arrays. The PV map may be stored in memory circuitry 310 of mapping device 300, and/or transmitted to another computing device for further processing. The PV map may be displayed by mapping device 300, or another computing device, for example, on a user interface and/or display.

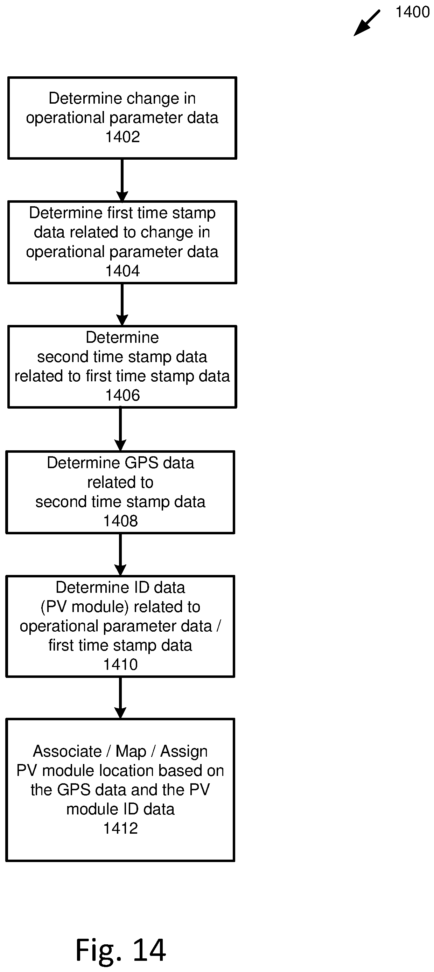

Reference is now made to FIG. 14 which shows an example method 1400 for determining (e.g., assigning, associating) a location of a PV module based upon timestamps, operational data (e.g., electrical and/or thermal data), GPS data, and/or ID data. While the description below describes that mapping device 300 performs the steps, method 1400 may be performed by shading device 100, power device 200, mapping device 300, and/or power and mapping device 400.

In step 1402, mapping device 300 may determine a change in operational parameter data (e.g., electrical and/or thermal parameter data, for example, a drop in power output) of a PV module. In step 1404, mapping device 300 may determine a first timestamp related to the change in operational parameter data. In step 1406, mapping device 300 may determine a second timestamp related to the first timestamp. The second timestamp may be the same as the first timestamp, or may be determined to be a certain time (e.g., milliseconds) after the first timestamp. In step 1408, mapping device 300 may determine GPS parameter data of a computing device (e.g., shading device 100) associated with the second timestamp. In step 1410, mapping device 300 may determine ID data of the PV module (e.g., based on a change of an operational parameter, based on image data, etc.). In step 1412, mapping device 300 may associate, map, and/or assign a PV module location based on the GPS parameter data and the ID data. Data may also be stored in memory and/or transmitted.

Reference is now made to FIG. 15 which shows an example method 1500 for collecting GPS, timestamp, and/or ID data. While the description below describes that shading device 100 performs the steps, method 1500 may be performed by shading device 100, power device 200, mapping device 300, and/or power and mapping device 400.

In step 1502, shading device 100 may be used to block and/or obscure a surface area of a PV module. This may prevent at least a part of the PV module from receiving light. In step 1504, shading device 100 may use GPS and transmitter circuitry 102 to determine GPS parameter data of shading device 100. In step 1506, shading device 100 may use clock 108 to determine a timestamp related to the GPS parameter data. In step 1508, shading device 100 may use camera 112 to determine ID data related to the PV module. The ID data may be a PV module ID number, barcode, and/or a PV module image. The ID data may be determined based on a change in an operational parameter in the PV module. For example, the ID data related to the PV module may be determined based on a drop in power of the PV module. In step 1510, shading device 100 may transmit GPS parameter data, timestamp data, and ID data via communication circuitry 104 to the communication circuitry 304 on mapping device 300. Data may also be stored in memory.

Reference is now made to FIG. 16 which shows an example method 1600 for collecting electrical parameter, timestamp, and/or ID data associated with a power module. While the description below describes that power device 200 performs the steps, method 1600 may be performed by shading device 100, power device 200, mapping device 300, and/or power and mapping device 400.

In step 1602, power device 200 may use sensor 202 to determine operational parameter data (e.g., electrical and/or thermal parameter data). In an example, power device 200 may determine a plurality of operational parameters associated with the power module. Power device 200 may select an electrical parameter from the plurality of operational parameters based on the first timestamp and the second timestamp (e.g., based on a change of the electrical parameter at the first timestamp or the second timestamp is above a threshold). Power device 200 may select the PV module from a plurality of PV modules based on a change in the electrical parameter associated with the PV module.

In step 1604, power device 200 may use clock 208 to determine a timestamp related to the operational parameter data. In step 1606, power device 200 may use memory circuitry 210 to determine ID data associated with a power module. The ID data may comprise an internal serial number or other form of unique identification. The ID data may be determined based on a change in an operational parameter in the PV module. For example, the ID data related to the PV module may be determined based on a drop in power of the PV module. In step 1608, power device 200 may transmit the operational parameter data, the timestamp data, and the ID data to mapping device 300, for example, via communication circuitry 204 and to the communication circuitry 304. Data may also be stored in memory.

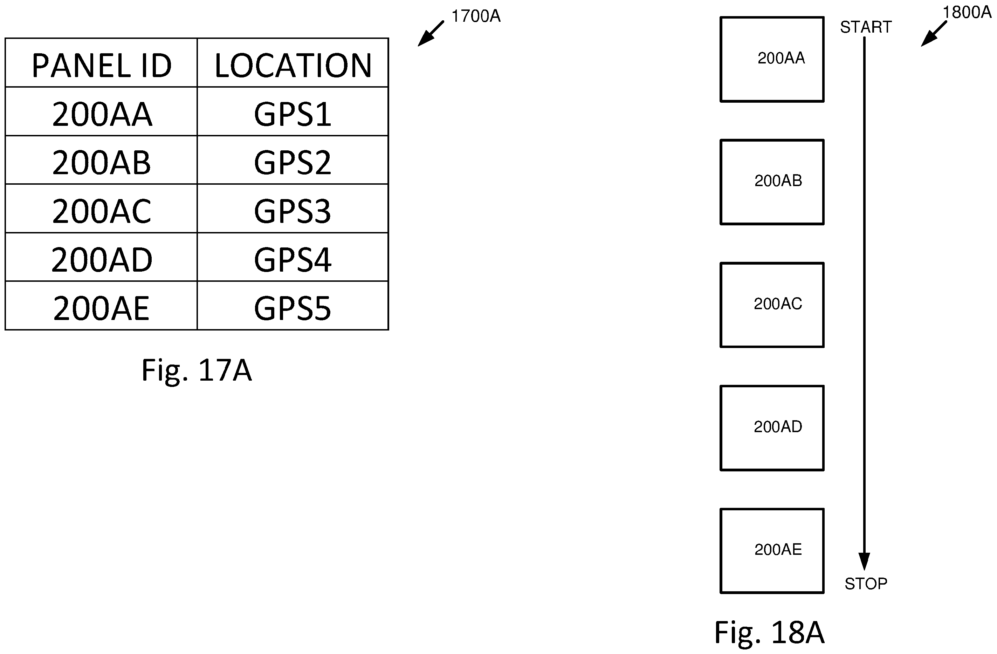

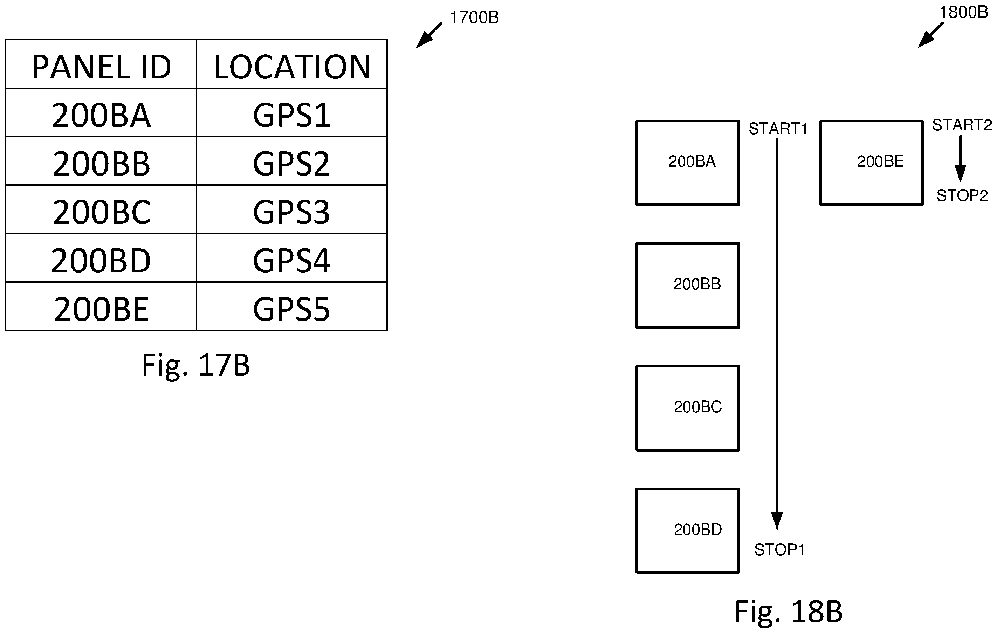

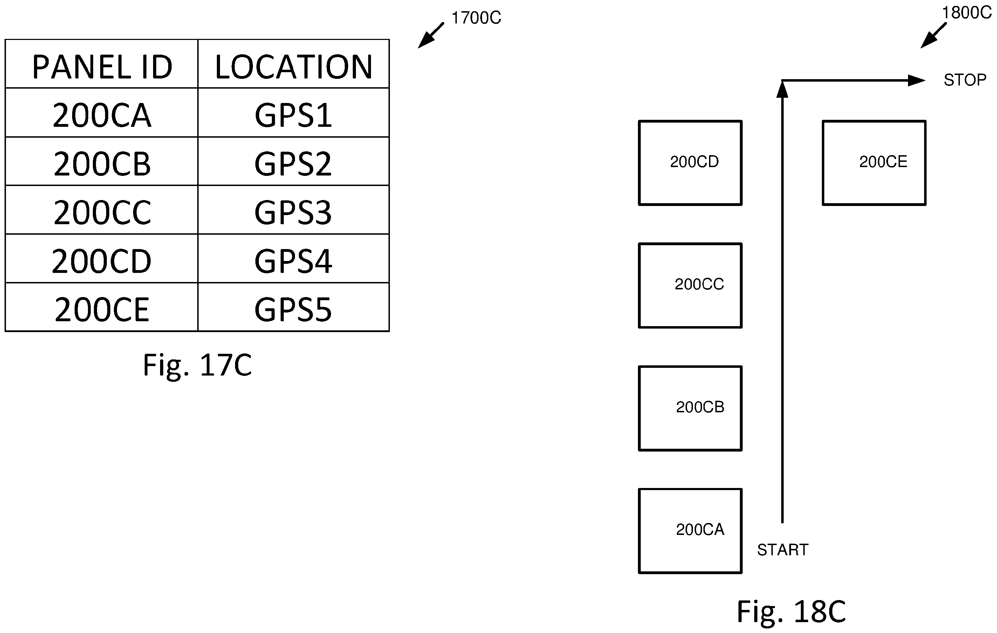

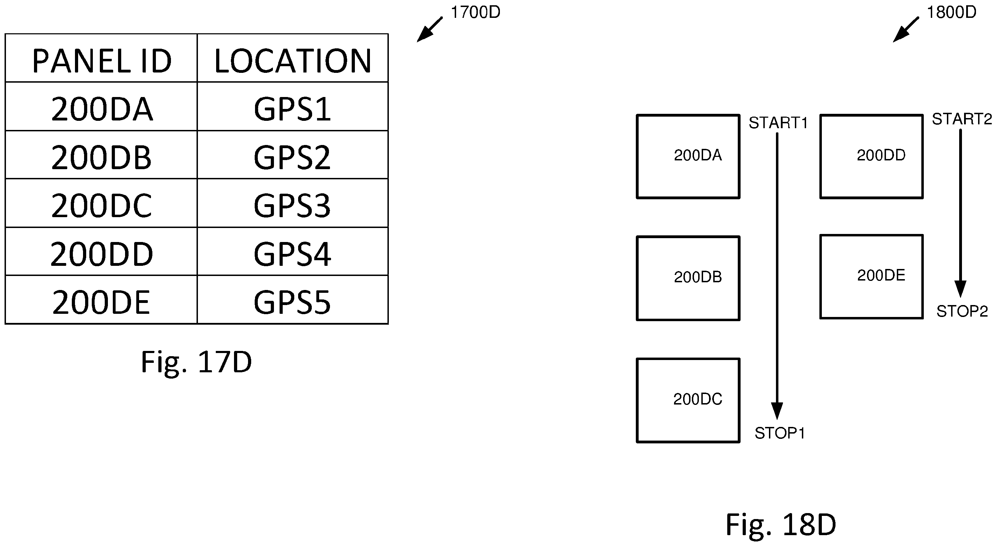

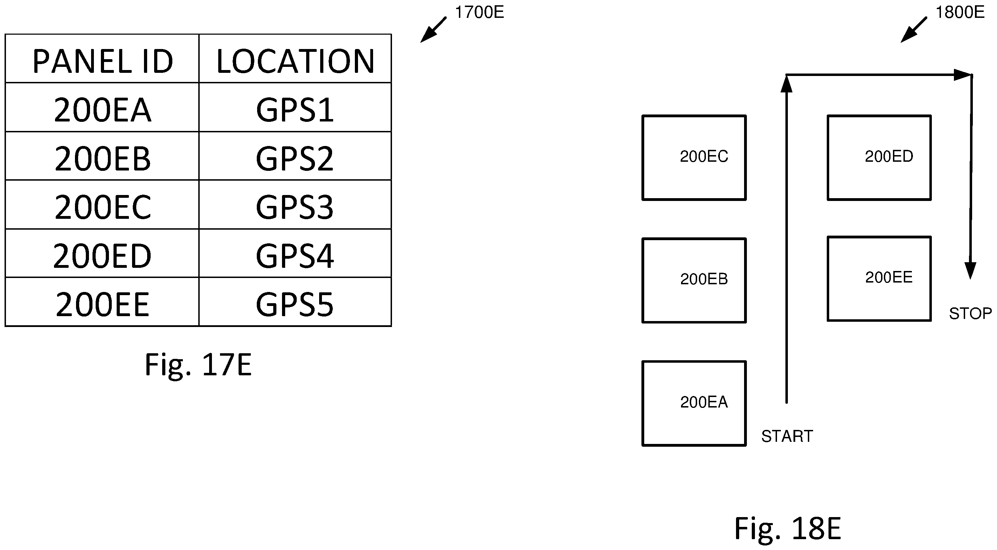

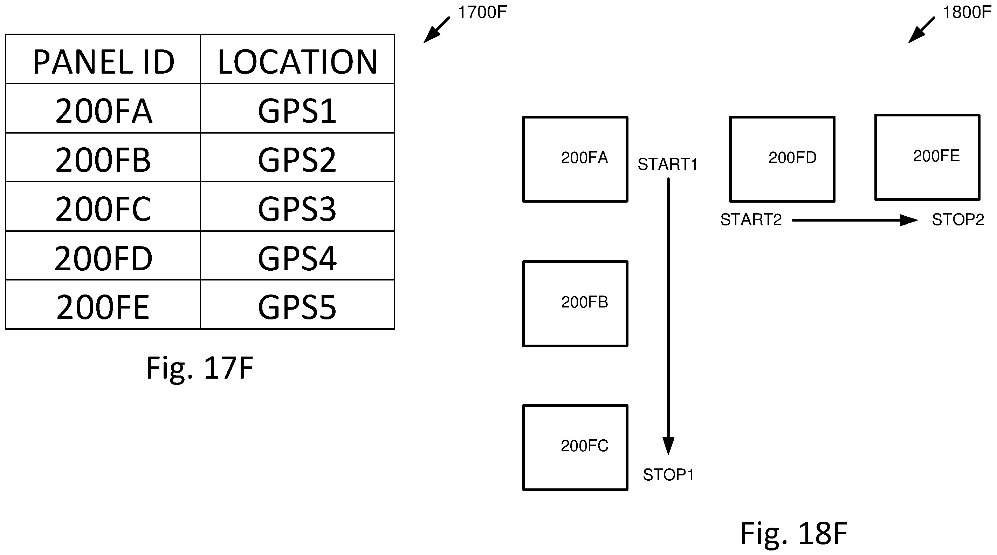

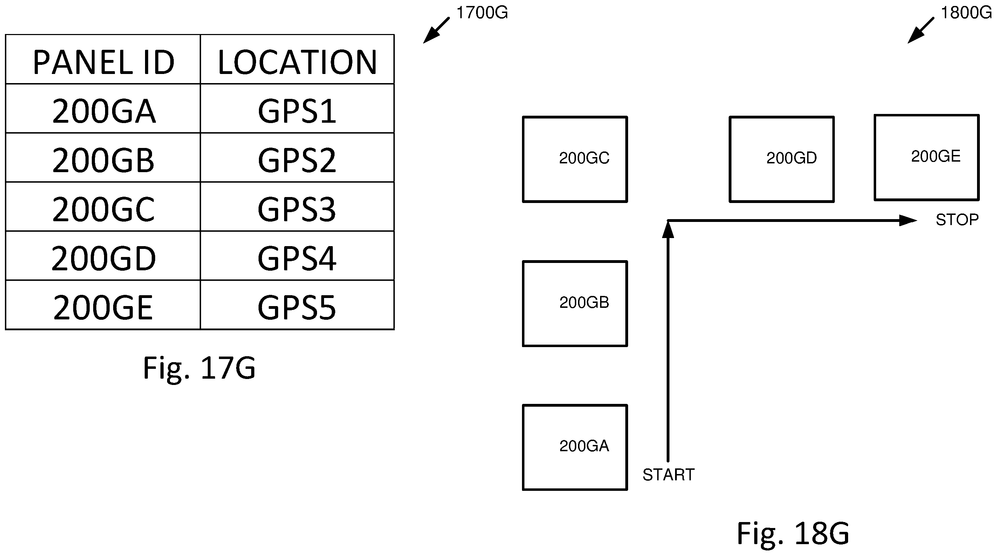

FIGS. 17A-17G show example tables of memory mapping the panel ID to the GPS location data. FIGS. 18A-18G show the paths that shading device 100 may take to produce the table in FIGS. 17A-17G. The paths shown in FIGS. 18A-18G are only examples and other paths may be taken to determine the locations of the power modules.

In system 1800A, shading device 100 may start the GPS and transmitter circuitry 102 using start/stop interface 114. Shading device 100 may shade power module 200AA. Camera 112 may scan power module 200AA to determine a panel identification of 200AA. In table 1700A, power module 200AA may be mapped at GPS location, GPS1. Next, Shading device 100 may shade power module 200AB. Camera 112 may scan power device 200AB to determine a panel identification of power module 200AB. In table 1700A, power module 200AB may be mapped at GPS location, GPS2. Next, shading device 100 may shade power module 200AC. Camera 112 may scan power module 200AC to determine a panel identification of power module 200AC. In table 1700A, power module 200AC may be mapped at GPS location, GPS3. Next, shading device 100 may shade power module 200AD. Camera 112 may scan power module 200AD to determine a panel identification of power module 200AD. In table 1700A, power module 200AD may be mapped at GPS location, GPS4. Next, shading device 100 may shade power module 200AE. Camera 112 may scan power module 200AE to determine a panel identification of power module 200AE. In table 1700A, power module 200AE may be mapped at GPS location, GPS5. After power module 200AE is mapped, start/stop interface 114 may be used to stop the GPS and transmitter circuitry 102. Power modules 200AA, 200AB, 200AC, 200AD, 200AE may be part of the same power string, and may be connected in series. There might not be any power module between any two of power modules 200AA, 200AB, 200AC, 200AD, 200AE. Alternatively the panel identification may be determined without a camera, based on a change in an operational parameter of the given PV module (e.g., a determined drop in power production of the PV module).

In system 1800B, shading device 100 may start the GPS and transmitter circuitry 102 using start/stop interface 114. Shading device 100 may shade power module 200BA. Camera 112 may scan power module 200BA to determine a panel identification of power module 200BA. In table 1700B, power module 200BA may be mapped at GPS location, GPS1. Next, Shading device 100 may shade power module 200BB. Camera 112 may scan power module 200BB to determine a panel identification of power module 200BB. In table 1700B, power module 200BB may be mapped at GPS location, GPS2. Next, shading device 100 may shade power module 200BC. Camera 112 may scan power module 200BC to determine a panel identification of 200BC. In table 1700B, power module 200BC may be mapped at GPS location, GPS3. Next, shading device 100 may shade power module 200BD. Camera 112 may scan power module 200BD to determine a panel identification of 200BD. In table 1700B, power module 200BD may be mapped at GPS location, GPS4. After power module 200BD is mapped, start/stop interface 114 may be used to stop the GPS and transmitter circuitry 102. Shading device 100 may be moved to a new row of PV modules. Shading device 100 may restart the GPS and transmitter circuitry 102 using start/stop interface 114. Shading device 100 may shade power module 200BE. Camera 112 may scan power device 200BE to determine a panel identification of power module 200BE. In table 1700B, power device 200BE may be mapped at GPS location, GPS5. After power device 200BE is mapped, start/stop interface 114 may be used to stop the GPS and transmitter circuitry 102. Power modules 200BA, 200BB, 200BC, 200BD, 200BE may be part of the same power string, and may be connected in series. Alternatively, power module 200BE may be part of a different power string from the power string that comprises power modules 200BA, 200BB, 200BC, and 200BD. Alternatively the panel identification may be determined without a camera, based on a change in an operational parameter of the given PV module (e.g., a determined drop in power production of the PV module).

In system 1800C, shading device 100 may start the GPS and transmitter circuitry 102 using start/stop interface 114. Shading device 100 may shade power module 200CA. Camera 112 may scan power module 200CA to determine a panel identification of 200CA. In table 1700C, power module 200CA may be mapped at GPS location, GPS1. Next, shading device 100 may shade power module 200CB. Camera 112 may scan power module 200CB to determine a panel identification of power module 200CB. In table 1700C, power device 200CB may be mapped at GPS location, GPS2. Next, shading device 100 may shade power module 200CC. Camera 112 may scan power device 200CC to determine a panel identification of power module 200CC. In table 1700C, power module 200CC may be mapped at GPS location, GPS3. Next, shading device 100 may shade power module 200CD. Camera 112 may scan power module 200CD to determine a panel identification of power module 200CD. In table 1700C, power module 200CD may be mapped at GPS location, GPS4. Shading device 100 may be moved to a new row of PV modules. Shading device 100 may shade power module 200CE. Camera 112 may scan power module 200CE to determine a panel identification of power module 200CE. In table 1700C, power module 200CE may be mapped at GPS location, GPS5. After power module 200CE is mapped, start/stop interface 114 may be used to stop the GPS and transmitter circuitry 102. Power modules 200CA, 200CB, 200CC, 200CD, 200CE may be part of the same power string, and may be connected in series. Alternatively, power module 200CE may be part of a different power string from the power string that comprises power modules 200CA, 200CB, 200CC, and 200CD. Alternatively the panel identification may be determined without a camera, based on a change in an operational parameter of the given PV module (e.g., a determined drop in power production of the PV module).

In system 1800D, shading device 100 may start the GPS and transmitter circuitry 102 using start/stop interface 114. Shading device 100 may shade power module 200DA. Camera 112 may scan power module 200DA to determine a panel identification of power module 200DA. In table 1700D, power module 200DA may be mapped at GPS location, GPS1. Next, shading device 100 may shade power module 200DB. Camera 112 may scan power module 200DB to determine a panel identification of power module 200DB. In table 1700D, power module 200DB may be mapped at GPS location, GPS2. Next, shading device 100 may shade power module 200DC. Camera 112 may scan power module 200DC to determine a panel identification of 200DC. In table 1700D, power module 200DC may be mapped at GPS location, GPS3. After power module 200DC is mapped, start/stop interface 114 is used to stop the GPS and transmitter circuitry 102. Shading device 100 may be moved to a new row of PV modules. Shading device 100 may restart the GPS and transmitter circuitry 102 using start/stop interface 114. Next, shading device 100 may shade power module 200DD. Camera 112 may scan power module 200DD to determine a panel identification of power module 200DD. In table 1700D, power module 200DD may be mapped at GPS location, GPS4. Finally, shading device 100 may shade power module 200DE. Camera 112 may scan power module 200DE to determine a panel identification of power module 200DE. In table 1700D, power module 200DE may be mapped at GPS location, GPS5. After power module 200DE is mapped, start/stop interface 114 may be used to stop the GPS and transmitter circuitry 102. Power modules 200DA, 200DB, 200DC, 200DD, 200DE may be part of the same power string, and may be connected in series. Alternatively, power module 200DD and power module 200DE may be part of a different power string from the power string that comprises power modules 200DA, 200DB, and 200DC. Alternatively the panel identification may be determined without a camera, based on a change in an operational parameter of the given PV module (e.g., a determined drop in power production of the PV module).

In system 1800E, shading device 100 may start the GPS and transmitter circuitry 102 using start/stop interface 114. Shading device 100 may shade power module 200EA. Camera 112 may scan power module 200EA to determine a panel identification of power module 200EA. In table 1700E, power module 200EA may be mapped at GPS location, GPS1. Next, Shading device 100 may shade power module 200EB. Camera 112 may scan power module 200EB to determine a panel identification of power module 200EB. In table 1700E, power module 200EB may be mapped at GPS location, GPS2. Next, shading device 100 may shade power module 200EC. Camera 112 may scan power module 200EC to determine a panel identification of power module 200EC. In table 1700E, power module 200EC may be mapped at GPS location, GPS3. Shading device 100 may be moved to a new row of PV modules. Next, shading device 100 may shade power module 200ED. Camera 112 may scan power module 200ED to determine a panel identification of power module 200ED. In table 1700E, power module 200ED may be mapped at GPS location, GPS4. Finally, shading device 100 may shade power module 200EE. Camera 112 may scan power module 200EE to determine a panel identification of power module 200EE. In table 1700E, power module 200EE may be mapped at GPS location, GPS5. After power module 200EE is mapped, start/stop interface 114 may be used to stop the GPS and transmitter circuitry 102. Power modules 200EA, 200EB, 200EC, 200ED, 200EE may be part of the same power string, and may be connected in series. Alternatively, power module 200ED and power module 200EE may be part of a different power string from the power string that comprises power modules 200EA, 200EB, and 200EC. Alternatively the panel identification may be determined without a camera, based on a change in an operational parameter of the given PV module (e.g., a determined drop in power production of the PV module).

In system 1800F, shading device 100 may start the GPS and transmitter circuitry 102 using start/stop interface 114. Shading device 100 may shade power module 200FA. Camera 112 may scan power module 200FA to determine a panel identification of power module 200FA. In table 1700F, power module 200FA may be mapped at GPS location, GPS1. Next, Shading device 100 may shade power module 200FB. Camera 112 may scan power module 200FB to determine a panel identification of power module 200FB. In table 1700F, power module 200FB may be mapped at GPS location, GPS2. Next, shading device 100 may shade power module 200FC. Camera 112 may scan power module 200FC to determine a panel identification of power module 200FC. In table 1700F, power module 200FC may be mapped at GPS location, GPS3. After power module 200FC is mapped, start/stop interface 114 may be used to stop the GPS and transmitter circuitry 102. Shading device 100 may be moved to a new row of PV modules. Shading device 100 may restart the GPS and transmitter circuitry 102 using start/stop interface 114. Next, shading device 100 may shade power module 200FD. Camera 112 may scan power module 200FD to determine a panel identification of power module 200FD. In table 1700F, power module 200FD may be mapped at GPS location, GPS4. Shading device 100 may be moved to a new row of PV modules. Shading device 100 may shade power module 200FE. Camera 112 may scan power module 200FE to determine a panel identification of power module 200FE. In table 1700F, power module 200FE may be mapped at GPS location, GPS5. After power module 200FE is mapped, start/stop interface 114 may be used to stop the GPS and transmitter circuitry 102. Power modules 200FA, 200FB, 200FC, 200FD, and 200FE may be part of the same power string, or may be part of different power strings. Power modules 200FA, 200FB, 200FC, 200FD, and 200FE may be connected in series. Alternatively the panel identification may be determined without a camera, based on a change in an operational parameter of the given PV module (e.g., a determined drop in power production of the PV module).

In system 1800G, shading device 100 may start the GPS and transmitter circuitry 102 using start/stop interface 114. Shading device 100 may shade power module 200GA. Camera 112 may scan power module 200GA to determine a panel identification of power module 200GA. In table 1700G, power module 200GA may be mapped at GPS location, GPS1. Next, Shading device 100 may shade power module 200GB. Camera 112 may scan power module 200GB to determine a panel identification of power module 200GB. In table 1700G, power module 200GB may be mapped at GPS location, GPS2. Next, shading device 100 may shade power module 200GC. Camera 112 may scan power module 200GC to determine a panel identification of power module 200GC. In table 1700G, power module 200GC may be mapped at GPS location, GPS3. Shading device 100 may be moved to a new row of PV modules. Next, shading device 100 may shade power module 200GD. Camera 112 may scan power module 200GD to determine a panel identification of power module 200GD. In table 1700G, power module 200GD may be mapped at GPS location, GPS4. Shading device 100 may be moved to a new row of PV modules. Shading device 100 may shade power module 200GE. Camera 112 may scan power module 200GE to determine a panel identification of power module 200GE. In table 1700G, power module 200GE may be mapped at GPS location, GPS5. After power module 200GE is mapped, start/stop interface 114 may be used to stop the GPS and transmitter circuitry 102. Power modules 200GA, 200GB, 200GC, 200GD, and 200GE may be part of the same power string, or may be part of different power strings. Power modules 200GA, 200GB, 200GC, 200GD, and 200GE may be connected in series. Alternatively the panel identification may be determined without a camera, based on a change in an operational parameter of the given PV module (e.g., a determined drop in power production of the PV module).

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

The present application also discloses the subject matter in the following clauses:
Clause 1: A method comprising: obtaining an electrical parameter related to a photovoltaic (PV) power source; determining a first timestamp corresponding to the electrical parameter; obtaining a Global Positioning System (GPS) parameter of a computing device; determining a second timestamp corresponding to the GPS parameter; determining based on that the first timestamp matches the second timestamp and the GPS parameter, a location of the PV power source; and storing the location of the PV power source.
Clause 2: The method of clause 1, further comprising: obtaining a second electrical parameter related to a second PV power source; determining a third timestamp corresponding to the second electrical parameter; obtaining a second GPS parameter of the computing device; determining a fourth timestamp corresponding to the second GPS parameter; determining based on the third timestamp and the fourth timestamp, a second location of the second PV power source; and storing, the second location of the second PV power source.
Clause 3: The method of clause 2, further comprising: determining based on the location of the PV power source and the second location of the second PV power source, a PV map.
Clause 4: The method of any of clauses 1-3, wherein the PV power source is at least partially shaded.
Clause 5: The method of any of clauses 2-4, wherein the second PV power source is at least partially shaded.
Clause 6: The method of clauses 1-5, wherein the obtaining the electrical parameter comprises determining a decrease in power produced by the PV power source.
Clause 7: The method of clause 6, wherein the decrease in power produced by the PV power source is caused by shading of the PV power source.
Clause 8: The method of any of clauses 1-7, further comprising shading, by the computing device, the PV power source to cause a decrease in power associated with electrical parameter.
Clause 9: The method of any of clauses 1-8, wherein the PV power source is shaded by a GPS device comprising GPS circuitry.
Clause 10: The method of clause 8, further comprising associating the first timestamp with the electrical parameter based on the decrease in power.
Clause 11: The method of clauses 8 or 10, further comprising determining the decrease in power based on a decrease of voltage.
Clause 12: The method of any of clauses 8, 10 or 11, further comprising determining the decrease in power based on a decrease of current.
Clause 13: The method of any of clauses 2-12, wherein the second PV power source is connected to the PV power source.
Clause 14: The method of clause 13, wherein the second PV power source is connected to the PV power source in series.
Clause 15: The method of clause 13, wherein the second PV power source is connected to the PV power source in parallel.
Clause 16: The method of any of clauses 6-15, further comprising determining the timestamp based on the decrease of power.
Clause 17: The method of any of clauses 6-16, further comprising selecting the electrical parameter from a plurality of electrical parameters based on the decrease of power.
Clause 18: The method of any of clauses 1-17, further comprising selecting the GPS parameter from a plurality of GPS parameters based on the second timestamp and the first timestamp.
Clause 19: The method of any of clauses 1-18, further comprising selecting the electrical parameter from a plurality of electrical parameters based on the first timestamp and the second timestamp.
Clause 20: The method of any of clauses 1-19, further comprising selecting the PV power source from a plurality of PV power sources based on the electrical parameter or the first timestamp.
Clause 21: The method of any clauses 1-20, wherein the electrical parameter is related to a shaded area of the PV power source.
Clause 22: The method of any of clauses 1-21, wherein sensor circuitry is part of a power device associated with the PV power source.
Clause 23: The method of any of clauses 1-22, wherein processor circuitry is part of a power device associated with the PV power source.
Clause 24: The method of clause 22 or clause 23, wherein the power device comprises converter circuitry.
Clause 25: The method of clause 24, wherein the converter circuitry comprises direct current (DC) to alternating current (AC) converter circuitry, or DC to DC converter circuitry.
Clause 26: The method of any of clauses 23-25, wherein the processor circuitry is part of an inverter associated with the PV power source.
Clause 27: The method of any of clauses 23-25, wherein the processor circuitry is part of a central computer or server in proximity to the PV power source, or in the cloud.
Clause 28: The method of any of clauses 1-27, wherein memory circuitry comprises computer readable non-volatile memory.
Clause 29: The method of any of clauses 1-28, further comprising repeating the steps of clause 1 for a plurality of PV power sources.
Clause 30: The method of clause 29, wherein the plurality of PV power sources are connected to the PV power source of clause 1.
Clause 31: The method of clause 30, wherein the plurality of PV power sources are connected to each other in series.
Clause 32: The method of clauses 30 or 31, further comprising generating a PV map or a PV chart based on the location of the PV power source and locations of the plurality of PV power sources determined from repeating the steps of clause 1 for the plurality of PV power sources.
Clause 33: The method of clause 32, further comprising transmitting or storing the PV map or PV chart.
Clause 34: The method of clauses 32 or 33, further comprising displaying the PV map or PV chart.
Clause 35. The method of any of clause 32-34, further comprising displaying the PV map or PV chart on a user interface.
Clause 36: An apparatus comprising circuitry configured to: obtain an electrical parameter related to a photovoltaic (PV) power source; obtain a first timestamp corresponding to the electrical parameter; obtain a GPS parameter related to the PV power source; obtain a second timestamp corresponding to the GPS parameter; and determine a location of the PV power source based on the first timestamp and the second timestamp.
Clause 37: An apparatus comprising circuitry configured to: obtain a first electrical parameter of a first photovoltaic (PV) power source based on a first shaded area of the first PV power source; determine a first power condition of the first PV power source based on the first electrical parameter; obtain a first global positioning system (GPS) parameter related to the first shaded area; obtain a second electrical parameter of a second PV power source based on a second shaded area of the second PV power source; determine a second power condition of the second PV power source based on the second electrical parameter; obtain a second GPS parameter related to the second shaded area; and determine a location of the first PV power source relative to the second PV power source based on the first power condition, the second power condition, the first GPS parameter, and the second GPS parameter.
Clause 38: A system comprising a photovoltaic (PV) power source, a power device, a shading device, and a mapping device, wherein the power device is configured to obtain an electrical parameter related to the PV power source, assign a first timestamp corresponding to the electrical parameter, and transmit the electrical parameter and the first timestamp; wherein the shading device is configured to obtain a GPS parameter related to the PV power source, assign a second timestamp corresponding to the GPS parameter, and transmit the GPS parameter and the second timestamp; and wherein the mapping device is configured to receive the electrical parameter and the first timestamp; receive the GPS parameter and the second timestamp; assign a second timestamp corresponding to the GPS parameter; and determine a location of the PV power source based on the first timestamp and the second timestamp.
Clause 39: A system comprising a photovoltaic (PV) power source, sensor circuitry configured to record an electrical parameter related to the PV power source, global positioning system (GPS) circuitry configured to record a GPS parameter related to the PV power source, processor circuitry configured to determine a first timestamp corresponding to the electrical parameter, a second timestamp corresponding to the GPS parameter, and a location of the PV power source according to the GPS parameter, based on the first timestamp corresponding to the electrical parameter and the second timestamp corresponding to the GPS parameter, and memory circuitry configured to store the location of the PV power source.
Clause 40: The system of clause 39, wherein the electrical parameter is at least one of: voltage, current, or power.
Clause 41: The system of clauses 39 or 40, wherein the sensor circuitry configured to record a thermal parameter related to the PV power source and the processor circuitry configured to determine a third timestamp corresponding to the electrical parameter and determine the location of the PV power source based on the third timestamp corresponding to the thermal parameter.
Clause 42: The system of clause 41, wherein the thermal parameter is a temperature.
Clause 43: The system of clauses 39 or 40, wherein the sensor circuitry configured to record a light parameter related to the PV power source and the processor circuitry configured to determine a third timestamp corresponding to the electrical parameter and determine the location of the PV power source based on the third timestamp corresponding to the light parameter.
Clause 44: The system of clause 43, wherein the light parameter is irradiance or illuminance.
Clause 45: A method comprising:
   obtaining, by a first computing device, an electrical parameter related to a photovoltaic (PV) power source;
   determining a first timestamp corresponding to the electrical parameter;
   obtaining a Global Positioning System (GPS) parameter of a second computing device;
   determining a second timestamp corresponding to the GPS parameter;
   determining, based on a determination that the first timestamp matches the second timestamp, a location of the PV power source; and
   storing, in a memory, the location of the PV power source.

## Claims

1. A method comprising:
obtaining an electrical parameter related to a photovoltaic (PV) power source;
determining a first time stamp corresponding to the electrical parameter;
obtaining a Global Positioning System (GPS) parameter of a computing device;
determining a second time stamp corresponding to the GPS parameter;
determining based on that the first time stamp matches the second time stamp and the GPS parameter, a location of the PV power source; and
storing the location of the PV power source.

2. The method of claim 1, further comprising:
obtaining a second electrical parameter related to a second PV power source;
determining a third time stamp corresponding to the second electrical parameter;
obtaining a second GPS parameter of the computing device;
determining a fourth time stamp corresponding to the second GPS parameter;
determining based on the third time stamp and the fourth time stamp, a second location of the second PV power source; and
storing, the second location of the second PV power source.

3. The method of claim 2, further comprising:
determining based on the location of the PV power source and the second location of the second PV power source, a PV map.

4. The method of any one of the preceding claims, wherein the PV power source is at least partially shaded.

5. The method of claim 2, wherein the second PV power source is at least partially shaded.

6. The method of any one of the preceding claims, wherein the obtaining the electrical parameter comprises determining a decrease in power produced by the PV power source.

7. The method of claim 6, further comprising determining the time stamp based on the decrease of power, and selecting the electrical parameter from a plurality of electrical parameters based on the decrease of power, and wherein the decrease in power produced by the PV power source is caused by shading of the PV power source.

8. The method of any one of the preceding claims, further comprising shading, by the computing device, the PV power source to cause a decrease in power associated with electrical parameter.

9. The method of any one of the preceding claims, wherein the PV power source is shaded by a GPS device comprising GPS circuitry.

10. The method of claim 8, further comprising associating the first time stamp with the electrical parameter based on the decrease in power.

11. The method of any one of the preceding claims, further comprising selecting the GPS parameter from a plurality of GPS parameters based on the second time stamp and the first time stamp, selecting the electrical parameter from a plurality of electrical parameters based on the first time stamp and the second time stamp, and selecting the PV power source from a plurality of PV power sources based on the electrical parameter or the first time stamp.

12. The method of any one of the preceding claims, wherein the electrical parameter is related to a shaded area of the PV power source.

13. The method of any one of the preceding claims, wherein sensor circuitry is part of a power device associated with the PV power source.

14. The method of any one of the preceding claims, wherein processor circuitry is part of a power device associated with the PV power source.

15. An apparatus comprising:
circuitry configured to:
obtain an electrical parameter related to a photovoltaic (PV) power source;
obtain a first time stamp corresponding to the electrical parameter;
obtain a GPS parameter related to the PV power source;
obtain a second time stamp corresponding to the GPS parameter; and
determine a location of the PV power source based on the first time stamp and the second time stamp.
